# EUROPEAN PATENT SPECIFICATION

(11) **EP 4 188 794 B1**
(45) Date of publication and mention of the grant of the patent: **22.11.2023**
(21) Application number: 21762092.1
(22) Date of filing: 27.07.2021
(51) Int. Cl.: B64C 1/06, B64C 3/18, B64C 3/24, B29C 70/54, B29C 70/88, B29C 70/64, B29D 99/00, B32B 5/26, B32B 5/14, B32B 13/14, B32B 33/00, B32B 38/00, B29C 70/30, B32B 3/04, B32B 5/02, B32B 7/12

(54) **PROCESS FOR MANUFACTURING A STRUCTURAL COMPONENT IN COMPOSITE MATERIAL STIFFENED WITH AT LEAST ONE STRINGER**
VERFAHREN ZUR HERSTELLUNG EINES STRUKTURBAUTEILS AUS VERBUNDSTOFF MIT VERSTEIFUNG MIT MINDESTENS EINEM STRINGER
PROCÉDÉ DE FABRICATION D'UN COMPOSANT STRUCTURAL EN MATÉRIAU COMPOSITE RIGIDIFIÉ PAR AU MOINS UNE LISSE

(30) Priority: 27.07.2020 IT 202000018139
(43) Date of publication of application: 07.06.2023
(73) Proprietor: Leonardo S.p.a., 00195 Roma (IT)
(72) Inventor: CORVAGLIA, Stefano Giuseppe, 74023 Grottaglie (TA) (IT); GAMBARDELLA, Pasquale, 74023 Grottaglie (TA) (IT)
(74) Representative: Studio Torta S.p.A.
(86) International application number: PCT/IB2021/056813
(87) International publication number: WO 2022/023975

(56) References cited:
- EP-A1- 2 886 311
- EP-A1- 3 028 845
- EP-A1- 3 549 755
- EP-B1- 3 028 845
- US-A1- 2008 087 768
- US-B2- 10 442 153

## Description

### CROSS-REFERENCE TO RELATED APPLICATIONS

This Patent Application claims priority from Italian Patent Application No. 102020000018139 filed on July 27, 2020.

### TECHNICAL SECTOR

This invention concerns a process for manufacturing a structural component in composite material, stiffened with at least one stringer.

In particular, this description will explicitly refer to the manufacture of a fuselage, a wing, portions thereof or other structural parts of an aircraft without the general applicability hereof being lost on account thereof.

### PRIOR ART

Structural components used in aviation, such as fuselages, wings and portions thereof, are known to be made of composite material. The use of this material is made necessary by the need to reduce the overall weight of aircraft and eliminate or minimise corrosion problems in aircraft.

The composite material used in the most common solutions consists of fibre material, for example carbon fibre that has been pre-impregnated with epoxy, BMI or some other non-cured or pre-cured material. The said material is deposited in moulds and then processed under temperature and pressure. Other methods use dry-fibre that is generally impregnated with fluid resin according to a well-known process (for example by means of the method known as "Resin Transfer Moulding" or RTM).

Typically, structural components of the type described above, such as fuselages, wings or parts thereof, are manufactured by joining a composite skin with a plurality of stiffening stringers, which are also made of composite material and are generally positioned parallel to a predefined direction in which the said structural component extends itself.

In particular, each stringer is usually defined by a thin-walled longitudinal profile, comprising:
- one or two longitudinal lateral flanges suitable to be joined to the skin; and
- a raised portion of predefined geometry protruding transversely with respect to the flange/s.

The stringers that are most commonly used in the industry have an omega, T-, L-, J- or Z- cross- section.

In order to produce the leather, a plurality of layers of said uncured composite material are laminated together.

Similarly, in order to produce the stringers, many layers of uncured composite material are placed on a suitably shaped forming tool.

Once the skin and stringers have been manufactured, they are brought into contact with the skin and joined to the skin at the respective flange/s.

In this first embodiment, the assembly thus formed is then subjected to a co-curing operation in an autoclave by applying high pressure and high temperatures, so as to cure the composite material, compact the above-mentioned layers together and cause the stringers to be joined to the skin.

In practice, each stringer is applied rigidly and integrally to one face of the skin, normally but not exclusively the face defining the inner wall of the skin, that is to say the face that is being used facing the inside of the fuselage or wing.

The structural component is manufactured in this manner.

In another embodiment, the stringers can be pre-cured after they have been formed and then joined to the skin by using a structural adhesive. The assembly thus formed is brought into an autoclave and subjected to high pressure and high temperatures to cure the fresh composite material, compact the different layers together, and cause the stringers to bond to the skin. This operation is commonly referred to in the industry as 'co-bonding'.

Co-bonding can also be performed by pre-curing the skin alone and bonding it to uncured stringers with structural adhesive.

In a further embodiment, both the skin and the stringers can be pre-cured and then joined with structural adhesive. This operation is commonly referred to in the industry as "bonding" and either can take place in an autoclave or take place cold.

The skin and the stringers can also be joined in different ways.

A first mode, known as "Inner Mould Line" or IML, involves the use of a curing tool, often referred to as a "mandrel", whose outward shape defines the internal surface of the portion of the fuselage or wing to be manufactured. In practice, the mandrel has respective longitudinal cavities, each capable of housing a stiffening stringer.

Once the stringers have been positioned in the aforementioned cavities of the mandrel, it may be necessary, depending on the geometry of the stringers themselves, to insert different types of inserts, known in the industry as "bladders" and "noodles", into the various cavities that may be formed following the positioning of the stringers on the mandrel; these inserts are designed to keep the various components in position and prevent them from being crushed due to high pressure when passing through the autoclave.

At this point, the assembly consisting of the mandrel, stringers and inserts is covered with the relative portion of skin that will form the external surface of the aforementioned portion of the fuselage or wing. If the stringers or skin, or both, have been pre-cured, a layer of structural adhesive is placed between the skin and the said stringers.

Therefore, the mandrel defines the innermost component in the resulting assembly.

At this point, the entire assembly undergoes a co-curing, co-bonding or bonding operation, as defined above, during which the stringers are firmly coupled and joined onto the skin.

During this operation, the bladders, which are made of an elastically deformable material and which may be either cavity or solid internally, expand so as to counteract the pressure applied to the outside of the assembly during the autoclaving operation. More precisely, in the case of cavity bladders, the inside thereof is locked by means of openings to the autoclave's inside, so that both the outside of the assembly and any cavities in the stringers are subjected to the same pressure. In the case of solid bladders, the bladders are made of a material that expands with the increasing temperature.

As an alternative to cavity bladders, tubular bags may be used, the inside of which is locked to the autoclave's inside.

The noodles continue to be integrated into the structure, while the bladders are extracted at the end of the curing phase.

A second mode, known as 'Outer Mould Line' or OML, involves the use of an 'external' mandrel: the process is similar to IML, except that the mandrel surrounds and supports the outer surface of the skin.

The phase of trimming the longitudinal side edges of the flanges of the stiffening stringers, which is carried out while the stringers are being formed on the forming tool, is also known in the industry.

In particular making a 90° cut of these edges in relation to a support plane supporting the stringer while the aforementioned edges are being cut, said cut being defined by the forming tool, is known in the industry. This type of cut is the easiest to make, since the support plane is normally a horizontal plane and the cut is made from top to bottom.

However, once the stringers are joined to the skin during the co-curing, co-bonding or bonding operation, the 90° cut of the edges of the stringers leads to a rather pronounced surface discontinuity with respect to the inner surface of the said skin; therefore, the transfer of the operating loads from the stringers to the skin and vice versa is not optimal and can be improved.

At the same time, the fibres at the cut edge are uncovered, increasing the risk of moisture infiltrating the layers forming the stringers' flanges and/or the finished component that is being delaminated.

EP3549755A1 discloses a process for manufacturing structural components made of composite materials, as defined in the preambles of claim 1 or 4.

### AIM AND ABSTRACT OF THE INVENTION

The aim of this invention is to disclose a process for manufacturing a structural component made of a composite material stiffened with at least one stringer, which is highly reliable and whose cost is limited, and which enables at least one of the problems specified above arising from processes of a known type described above to be solved.

According to this invention, this aim is achieved by a process for manufacturing a structural component made of a stiffened composite material having at least one stringer as claimed in claims 1 or 4.

### BRIEF DESCRIPTION OF THE DRAWINGS

For the purpose of having a better understanding of this invention, certain preferred non-limiting embodiments are described below, purely by way of example and with the aid of the accompanying drawings, wherein:
- Figure 1 is a perspective view of a structural component made of composite material, in particular a composite panel defining part of an aircraft fuselage manufactured by means of the manufacturing process disclosed by this invention;
- Figure 2 is a cross-sectional view, enlarged in scale and with parts having been removed for the sake of clarity, of a stiffening stringer of the structural component depicted in Figure 1 lying on a forming tool, while the said stringer is being formed;
- Figure 3 is a cross-sectional view, enlarged in scale and with parts removed for the sake of clarity, of the stiffening stringer depicted in Figure 2 during a subsequent operating condition;
- Figure 4 is a cross-sectional view, enlarged in scale and with parts removed for the sake of clarity, of the stiffening stringer depicted in Figure 3 during a subsequent operating condition;
- Figure 5 is a cross-sectional view of the structural component depicted in Figure 1 lying on a curing tool while the component is being cured;
- Figure 6 is a Figure similar to Figure 5 depicting a possible variant of the step shown therein;
- Figure 7 is a cross-sectional view of a curing tool used during a step in the manufacturing process described in an alternative embodiment of this invention;
- Figure 8 is a cross-sectional view of the structural component depicted in Figure 1 lying on the curing tool depicted in Figures 5 and 6 during the curing phase described in an alternative embodiment of the manufacturing process disclosed by this invention;
- Figure 9 is a Figure similar to Figure 8 depicting a possible variant of the step shown therein;
- Figures 10 to 13 are cross-sectional views of different types of structural components lying on the respective curing tools during the corresponding curing phases described in the respective further alternative embodiments of the manufacturing process disclosed by this invention;
- Figure 14A depicts Figures 10 to 13 enlarged in scale; and
- Figures 14B to 14D depict possible variants of the detail shown in Figure 14A.

### DETAILED DESCRIPTION

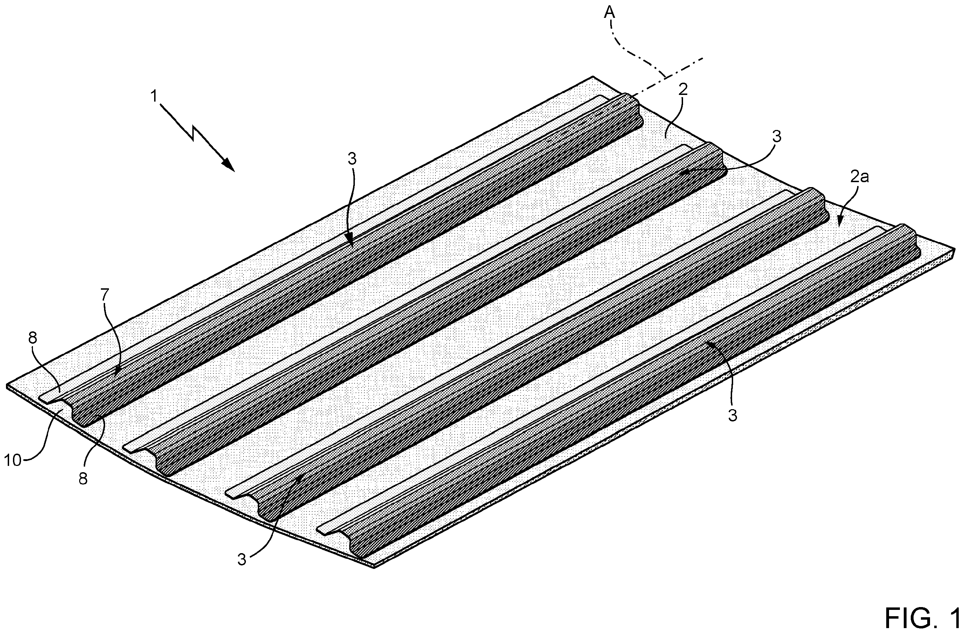

Figure 1 shows overall with 1 a first example of a structural component made of composite material manufactured by means of the process disclosed by this invention.

This description shall, in particular, explicitly refer, without the general applicability hereof being lost, to structural components used in aviation, for example an aircraft fuselage, wing or portion of a fuselage or wing, and a process for manufacturing such structural components.

According to the preferred embodiment described and shown herein, the structural component 1 is intended to form part of an aircraft fuselage and is defined by a panel comprising a composite skin 2 and a series of cavity longitudinal stiffening stringers 3 having a closed section, configured to stiffen the panel.

Each stringer 3 has an extension in a longitudinal direction that is significantly greater than the extension in the other two directions that are orthogonal to such longitudinal direction.

In the specific case shown herein, the aforementioned longitudinal direction of extension of the stringers 3 is, moreover, parallel in use to the axis of longitudinal extension of the fuselage formed at least in part by the structural component 1.

According to a possible alternative that has not been shown, the stringers 3 could be attached to the skin 2 in such a way that their longitudinal direction of extension is transverse or orthogonal to the longitudinal extension axis of the fuselage.

The use of composite structural components in the aircraft industry is dictated by the need to reduce the overall weight of aircraft and eliminate or minimize corrosion problems in aircraft.

In one embodiment, the composite material that is used is fibre material, for example carbon fibre, pre-impregnated with epoxy, BMI or other non-cured or pre-cured material. The material is deposited in moulds and then processed under temperature and pressure. Other methods use dry fibre that is generally impregnated with fluid resin according to a well-known process (for example the method known as "Resin Transfer Moulding" or RTM) .

The solution described in Figures 1 to 9 concerns a process for manufacturing the structural component 1, which is obtained by rigidly and integrally applying the stringers 3 to the skin 2 in such a way that each stringer 3 forms with said skin 2 a closed-profile cavity.

In particular, this description will explicitly refer to the manufacture of a single panel defining a part of the aforementioned fuselage, without the general applicability hereof being lost.

More particularly, it will be assumed for simplicity's sake that such a panel is flat or substantially flat, that is to say that it extends along a flat or substantially flat surface. However, the structural and functional characteristics and steps of the procedure are to be considered equally applicable to a panel extending along a surface having a curved or rotating layout, for example along a substantially parabolic surface, a vaulted surface or, again, a (substantially) cylindrical or tapered surface.

In the latter cases, the skin 2 will have a (substantially) cylindrical or tapered shape (that is not shown), presenting a central longitudinal axis. The stringers 3 will be arranged along their respective longitudinal axes parallel to the central axis of the skin 2.

Structural component 1 could also be defined by a barrel intended to form a ring-shaped portion of the fuselage.

Furthermore, this description will explicitly refer, without the general applicability hereof being lost, to a manufacturing process of the type known as "Inner Mould Line" or IML, which is well-known per se and is not described in detail.

However, the steps of the process are equally applicable, once the necessary changes have been made, in the case (that is not shown) in which the structural component is manufactured according to a process of the type known as "Outer Mould Line" or OML, which is also well-known per se and not described in detail.

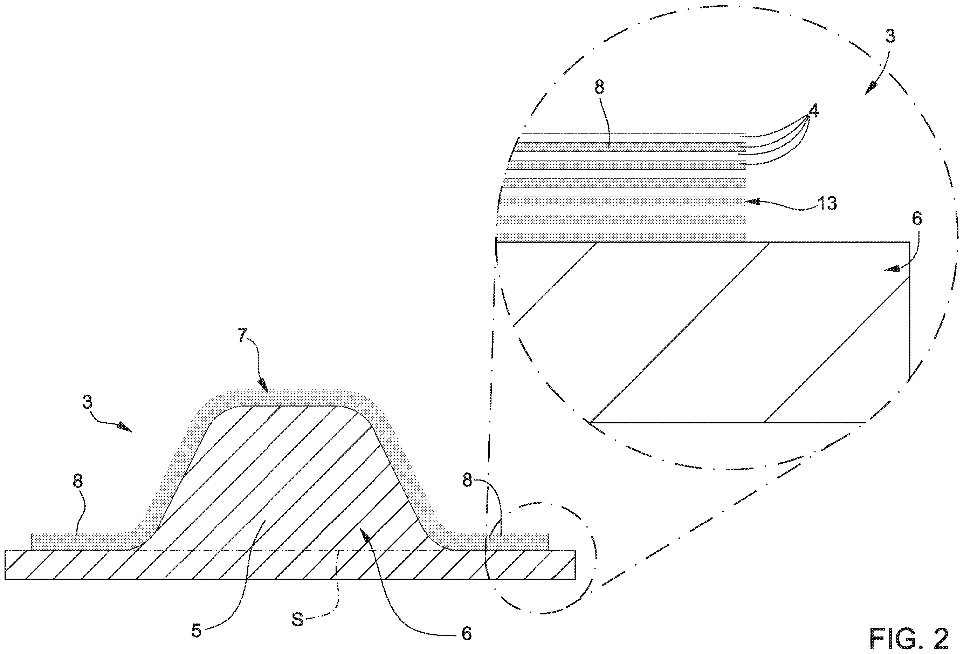

With reference to Figure 2, each stringer 3 is preferably made by arranging a plurality of layers 4 of uncured composite material on a shaped portion 5 of a tool, in particular a forming tool 6 specially configured to form the stringers 3.

In particular, each stringer 3 has a longitudinal axis A and comprises two lateral flanges 8, extending parallel to the respective axis A and along a single lying surface S, and a raised portion 7 centrally arranged between the flanges 8, protruding with respect to the latter and having a concave shape on one side.

As specified above, the non-limiting example described herein discloses a flat or substantially flat lying surface S. In an alternative embodiment that is not shown herein, the lying surface S could be curvilinear, that is to say it could be a surface of revolution obtained by rotating a curve about an axis parallel to the axis A of the stringer 3 under examination.

Therefore, in order to each form each stringer 3, the manufacturing process of the structural component 1 comprises the step of arranging a plurality of layers 4 of uncured composite material on the shaped portion 5 of the tool, which is in the aforementioned example the forming tool 6, so as to form said stringer 3.

According to this preferred and non-limiting embodiment, the stringers 3 have an omega-shaped cross-section.

Alternatively, the stringers 3 intended to create a closed cavity section with the skin 2 may have a different cross-sectional shape, for example a circular arc, semicircular, rectangular, polygonal, semi-ellipsoidal, semioval shape, etc.

In order to form the skin 2, the process of manufacturing the structural component 1 comprises the step of laminating a plurality of layers (that are not shown) of uncured composite material.

Such lamination is normally carried out directly on a curing tool, which will be described below.

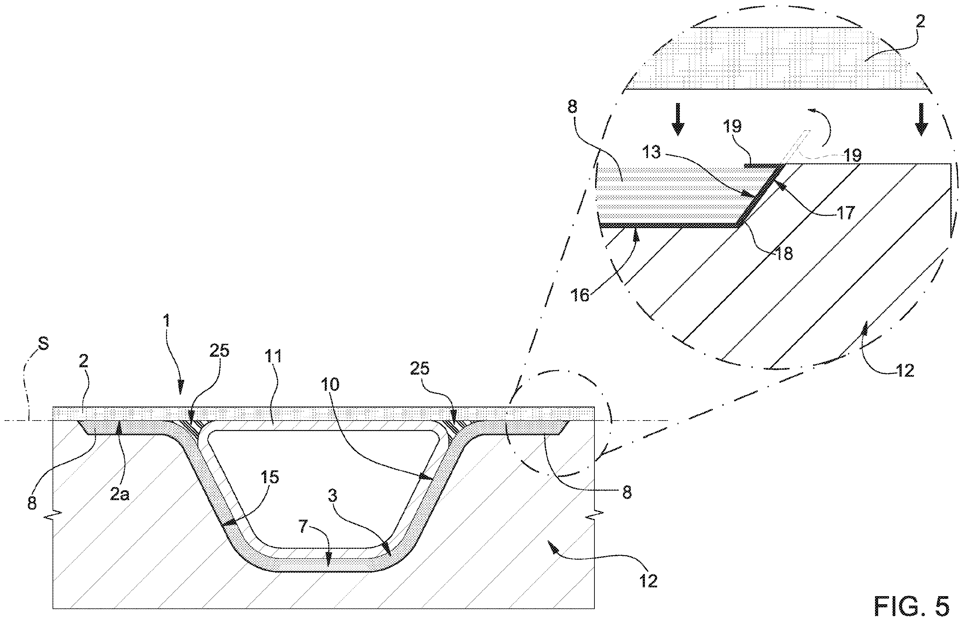

In order to make the panel defining the structural component 1, the manufacturing process further comprises the step of bringing into contact with each other a face 2a of the skin 2, parallel to the lying surface S, and therefore flat in the specific example, and the flanges 8 of each stringer 3, so as to form the respective closed profile cavities 10 (Figures 1 and 5) between the raised portion 7 of each stringer 3 and the skin 2 itself.

Furthermore, the stringers 3 are positioned parallel to a longitudinal direction of extension of the aircraft fuselage, as denoted above.

According to this preferred embodiment, the step of bringing the skin 2 and the stringers 3 into contact with each other is carried out by placing each previously formed stringer 3 and skin 2 on a special curing tool 12 (Figure 5) that is distinct and separate from the forming tool 6 used to make the stringers 3.

In particular, the curing tool 12 is defined by a body (commonly known as a "mandrel") comprising a wall extending along the lying surface S and presenting a plurality of longitudinally shaped slots or grooves 15 (only one of which is shown in Figure 5) configured to receive the previously formed stringers 3 prior to the step of bringing the skin 2 and stringers 3 into contact with each other and supporting them during the same step, as well as in a subsequent curing step or operation, as better described below.

In the preferred embodiment described and shown herein, the curing tool 12 is therefore flat, since the lying surface is flat.

In an alternative embodiment that is not shown, the curing tool 12 could be defined by a curved, or (substantially) cylindrical or tapered body, depending on the shape of the lying surface.

Conveniently, the manufacturing process further comprises, after the step of forming the stringers 3 and before the step of bringing the skin 2 and stringers 3 into contact with each other, the step of placing a longitudinal insert 11 (Figure 5), commonly known as a "bladder", within the raised portion 7 of each stringer 3, such that the insert 11 itself is entirely housed within the cavity 10 once the step of bringing the skin 2 and stringers 3 into contact with each other is completed.

In particular, the insert 11 is made of an elastically deformable material and can be expanded while the structural component 1 is subsequently being co-cured so as to maintain the cavity 10, as will be explained in more detail below.

More particularly, the step of positioning the inserts 11 is performed when the stringers 3 are arranged on the curing tool 12 within the respective shaped slots 15.

After the inserts 11 have been placed, additional inserts 25, commonly known as "noodles", are placed at the corners between them and the skin 2; said "noodles" act as fillers and are made of uncured composite material.

The aforementioned co-curing operation consists in applying high pressure and temperature (about 6 bar and 180°C) to the assembly composed of the skin 2, stringers 3, inserts 11, 25 and the curing tool 12, so as to cure the composite material, compact the aforementioned layers among themselves and join the stringers 3, the inserts 25 and the skin 2, in particular applying in a rigid and integral manner the stringers 3 to the face 2a of the skin 2.

Accordingly, the manufacturing process comprises the step of applying high temperature and pressure to the outside of said assembly and to the inside of the cavity 10 so as to cure the composite material and compact the layers together, while maintaining the cavity 10.

In this regard, the manufacturing process comprises, following the step of bringing the skin 2 and the stringers 3 into contact with each other and during the step of applying temperature and pressure, the step of expanding each insert 11 against the boundary walls of the respective cavity 10, in order to maintain said cavity 10 during the said co-curing operation.

In particular, since each insert 11 is defined in the aforementioned example by an elastically deformable cavity body, the step of the expansion thereof is carried out by applying pressure to the inside of the insert 11 itself, in particular by applying the same pressure applied to the outside of said assembly during the curing step.

More particularly, each insert 11 is provided, in a manner known and not described in detail, with valves connecting the inside of the said insert 11 with the outside thereof; in this way, during the curing step, the inside of the inserts 11 is subject to the same temperature and pressure conditions as the curing environment. Therefore, a possible deformation of the skin 2 towards the cavities 10, caused by the high pressure to which the structural component 1 is subjected during the co-curing operation, is avoided and the cavities 10 themselves are thus maintained.

According to an alternative embodiment that is not shown, the inserts 11 may be defined by solid bodies made of an elastically deformable and temperature-sensitive material, in particular a thermo-expandable material.

Therefore, in such a case, the expansion step is performed simply by exposing the insert 11 to the curing temperature, which will thus press against the walls delimiting the cavity 10.

According to an alternative embodiment that is not shown, the inserts 11 could be defined by simple tubular bags inside which the same pressure is applied as in the curing environment.

At the end of the co-curing operation, the resulting panel is separated from the curing tool 12 and the inserts 11 are removed.

As an alternative to the co-curing operation, the skin 2 and stringers 3 could be joined by co-bonding or bonding operations.

In the first case (co-bonding), the stringers 3 (or skin 2) could be cured and then joined to the uncured skin 2 (or uncured stringers 3) using a structural adhesive. The thus formed assembly would then be placed in an autoclave and subjected to high pressure and temperature to cure the fresh composite material, compact the different layers and cause the stringers 3 to join to the skin 2.

In the second case (bonding), both skin 2 and stringers 3 could be pre-cured and then joined by structural adhesive. This operation could be carried out either by autoclave- bonding or cold-bonding.

The trimming phase of the free end side edges 13 of each stringer 3, wherein each side edge 13 is defined by the free end of a respective flange 8 of the stringer 3, parallel to the axis A, spaced from the raised portion 7 and extending transversely to the lying surface S, is also known in the industry.

In particular, it is known to carry out a 90° cut of said side edges 13 with respect to a support plane 14 supporting the stringer 3 during the cutting operation and therefore with respect to the lying surface S of the flanges 8.

In the described example, the support plane 14 is defined by a flat upper face of the forming tool 6 adjacent to the shaped portion 5.

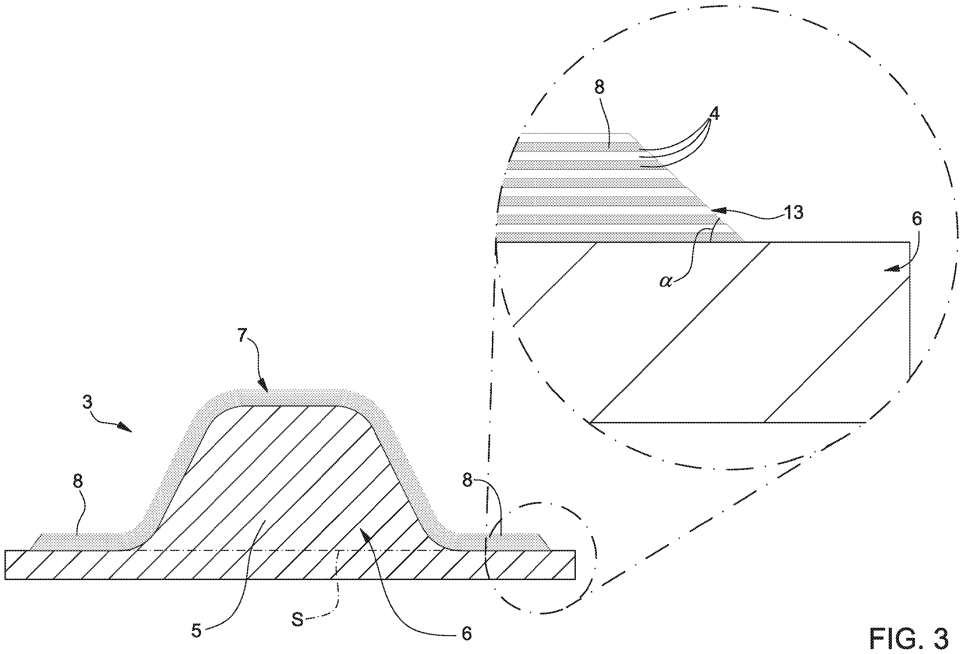

With reference to Figure 3, the process of manufacturing the structural component 1 comprises, after each stringer 3 has been formed, that is to say the step of arranging a plurality of layers 4 of uncured composite material on the shaped portion 5 of the forming tool 6, and before bringing the skin 2 and the stringers 3 into contact with each other, the step of cutting the side edges 13 of free ends of the flanges 8 in a slanted direction with respect to the lying surface S; said lying surface S is the surface along which the flanges 8 extend, in such a way that the cut layers 4 of the flanges 8 present, during the course of the subsequent step of bringing the skin 2 and the stringers 3 into contact with each other, an extension, along or parallel to the lying surface S itself, that increases while progressing towards the skin 2.

In other words, as shown in Figure 3, the side edges 13 are cut in a slanted direction with respect to the lying surface S, which is flat in the case shown above, so that each cut side edge 13 defines, on that side of the said edge side 13, an α acute angle with respect to the surface of the respective flange 8 placed on the forming tool 6, that is to say with respect to the lower surface of the respective flange 8 shown in Figure 3.

As can be seen in Figure 5, during the subsequent phase of bringing the skin 2 and the stringers 3 into contact with each other, the cut flanges 8 have an extension, measured along the lying surface S, increasing towards the face 2a of said skin 2.

In practice, each flange 8, in a section that is orthogonal to the axis A of the respective stringer 3, has a substantially semi-trapezoidal profile, wherein the slanted side is defined by the respective cut side edge 13, whose major base is intended to touch the face 2a of the skin 2.

The particular cutting configuration of the side edges 13 according to this solution makes it possible to avoid an accentuated surface discontinuity of the stringer 3 with respect to the face 2a of the skin 2, once the parts are integrally coupled. On the contrary, such shear shape determines a smoother connection between the flanges 8 of each stringer 3 and said skin 2, also improving the distribution of stresses in the junction area between the stringers 3 and the skin 2. In particular, the structural loads in use are better distributed from the stringers 3 to the skin 2 and vice versa.

Furthermore, the stringers 3 that have thus been obtained are easier to handle and to insert/extract in the curing tool 12, and in particular in the shaped cavity 15 of said curing tool 12, which ends at its opposite lateral ends with respective obtuse chamfers having the same inclination as the side edges 13. As a result thereof, said shaped cavity 15 may present a simple shape without acute chamfers and surface discontinuities.

According to this preferred and non-limiting embodiment, the step of cutting the side edges 13 is carried out when the relevant stringer 3 is arranged on the forming tool 6.

As can be seen in Figure 5, the manufacturing process comprises, after each stringer has been formed 3 and the lateral edges cut 13 and before the skin 2 and the stringers 3 have been brought into contact with each other, the step of arranging each stringer 3 in a shaped cavity of the tool, in particular in the shaped cavity 15 of the curing tool 12, which has been shaped to accommodate the formed and cut stringer 3.

In detail, each shaped cavity 15 has an outer profile, that is to say a wall delimiting the said cavity, which follows, that is to say traces, the profile of the side of the formed and cut stringer 3 opposite to the one intended to be applied to the face 2a of the skin 2.

In practice, each shaped cavity 15 is specially shaped to accommodate the stringers 3 having side edges 13 that have already been cut.

As specified above, due to the particular shape in which the flanges 8 is cut, the profile of the shaped cavity 15 is rather simple and free of sharp chamfers and surface discontinuities.

Advantageously, the manufacturing process also includes the step of coating the side edges 13 of the layers 4 that are cut in a slanted manner or at 90°, that is to say the flanges 8, with a composite material coating.

Such a composite coating is, at the end of the manufacturing process described herein, a constituent or integral part of the final structural component 1.

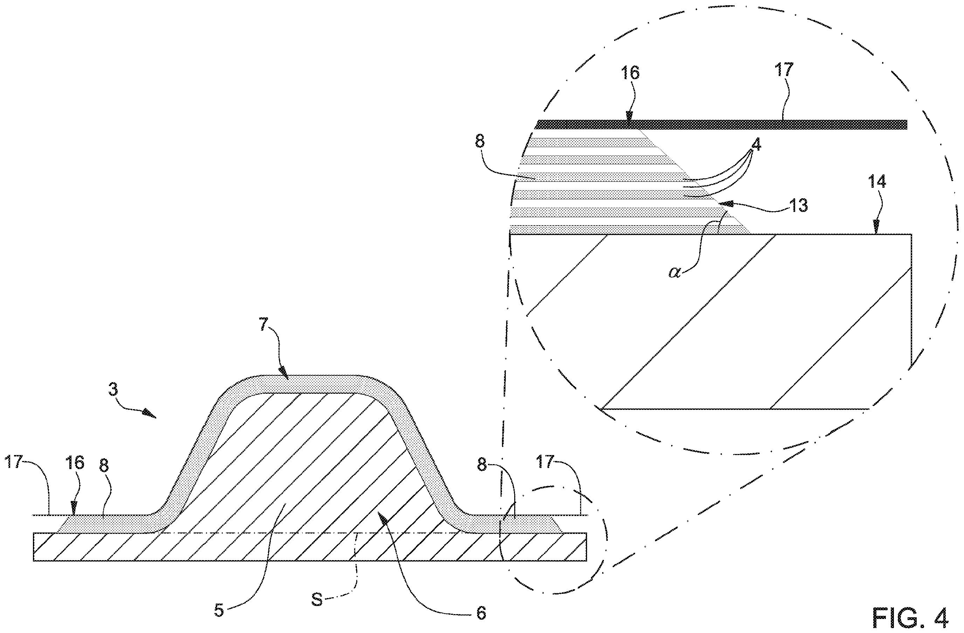

In particular, as shown in Figure 4, the manufacturing process comprises, after each stringer 3 has been formed and before the skin 2 and the stringers 3 have been brought into contact with each other, the step of laminating a further layer 16 of composite material forming the relevant stringer 3 that has been applied to the opposite side of the stringer 3 with respect to the side intended to be applied to the face 2a of the skin 2. More precisely, said further layer 16 defines the outermost layer of the stringer 3, that is to say the layer arranged on the "convex" side of the said stringer 3.

The further layer 16 has respective opposite lateral end flaps 17 protruding with respect to the side edges 13 of the flanges 8. Said flaps 17 therefore define the said composite material coating of the side edges 13 of the cut layers 4.

Therefore, the step of covering the side edges 13 is carried out by folding the flaps 17 over the respective side edges 13 to cover and seal them outwards.

In greater detail, according to the solution shown in Figure 5, first portions 18 of the flaps 17 cover, during the folding of the flaps 17 of the further layer 16, the side edges 13 of the respective wings 8; and second portions 19, which are still protruding from the side edges 13 themselves, are folded over the respective flanges 8 so as to interpose themselves, during the step of bringing the skin 2 and the stringers 3 into contact with each other, between the skin 2 and said stringers 3.

In practice, the flaps 17 are substantially folded in a "C"-shape around the side edges 13 of the flanges 8, so as to cover the layers 4 by sealing them outwards.

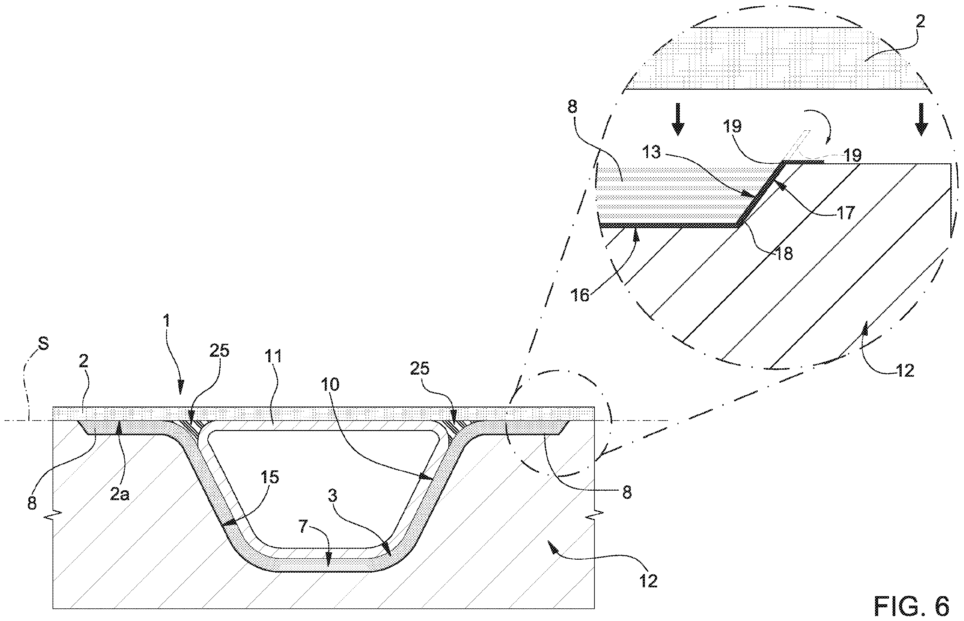

Alternatively, according to the solution shown in Figure 6, the second portions 19 of the flaps 17 are folded on the opposite side of the respective flanges 8 while the flaps 17 of the further layer 16 are being folded, that is to say on the curing tool 12, so as to interpose themselves between the skin 2 and the said curing tool 12 while the skin 2 and the stringers 3 are being brought into contact with each other.

In practice, the flaps 17 are substantially folded in a "Z"-shape around the side edges 13 of the flanges 8, so as to cover the layers 4 by sealing them outwards.

The fibres that remain uncovered as a result of cutting in a slanted manner or at 90° the side edges 13 are thus protected. This reduces or eliminates the risk of intrusion of moisture or other fluids between the layers 4 as well as the risk of the structural delamination of the finished component 1.

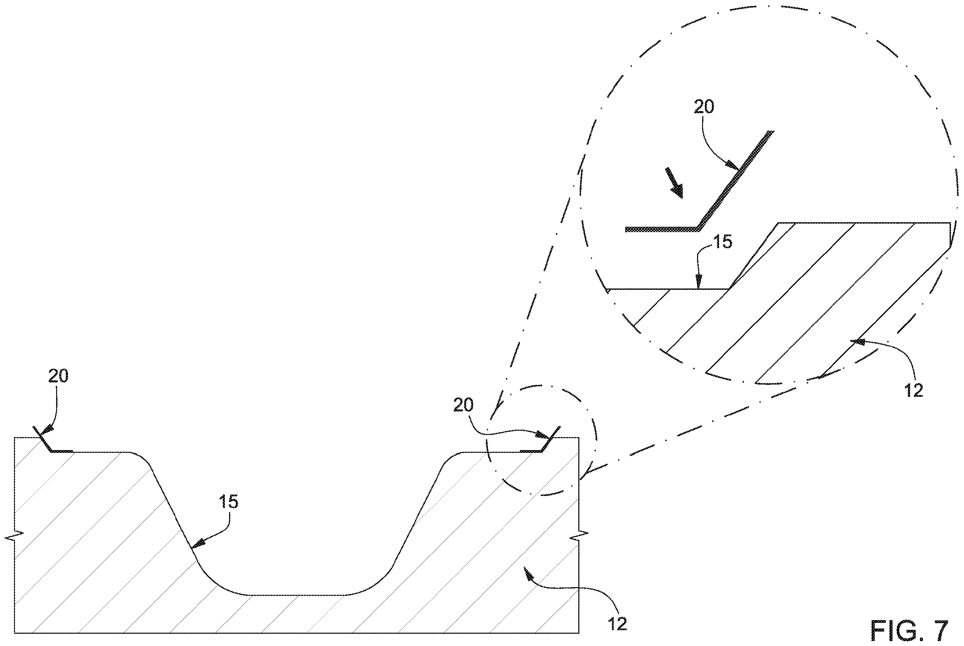

With reference to Figures 7 to 9, a step of the aforementioned manufacturing process of the structural component 1 will be shown and described below in an alternative embodiment of this invention.

In particular, according to this alternative embodiment of the manufacturing process, the step of covering the side edges 13 of the flanges 8 is carried out by applying patch elements 20 made of uncured composite material on the side edges 13 so as to cover them and seal them outwards. In this case, the patch elements 20 define the said composite material coating of the side edges 13 of the cut layers 4.

In particular, the patch elements 20 are defined by thin-walled longitudinal inserts of uncured composite material.

Preferably, as shown in Figure 7, the patch elements 20 are positioned in the shaped cavity 15 of the curing tool 12, particularly at the chamfers of the cavity that will accommodate and support the side edges 13 of the flanges 8.

Therefore, the patch elements 20 are applied on the side of the relevant stringer 3 that is opposite to the one intended to be applied to the face 2a of the skin 2.

In particular, the patch elements 20 are positioned so as to protrude from the side edges 13 of the flanges 8.

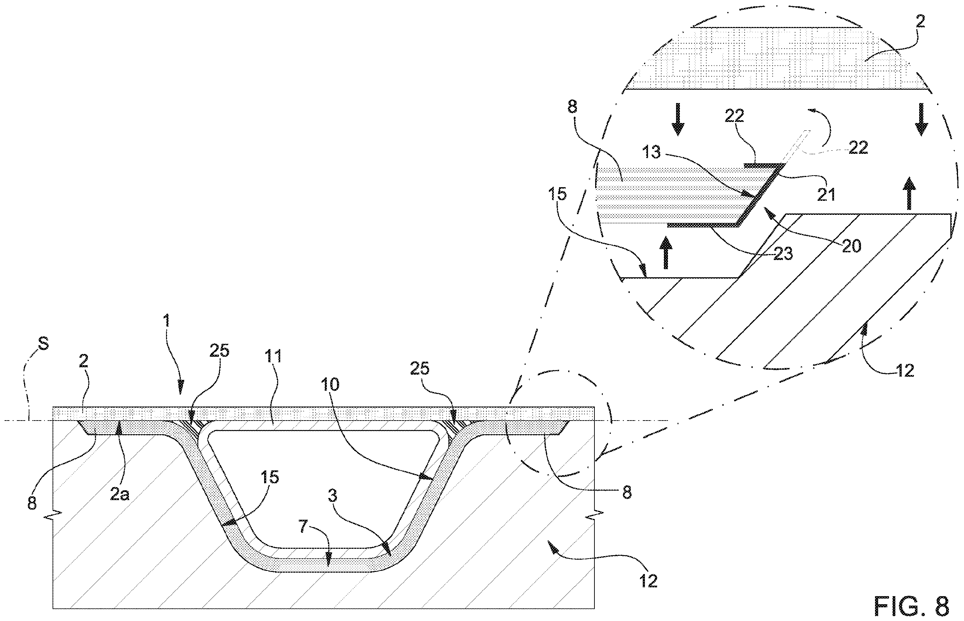

As can be seen in the solution of Figure 8, the first portions 21 of the patch elements 20 that cover the side edges 13 and the second portions 22 that are still protruding from said side edges 13 themselves are folded over the respective flanges 8 while the patch elements 20 are applied to the side edges 13, so as to interpose themselves between the skin 2 and the respective stringers 3 while the skin 2 and the stringers 3 are being brought into contact.

Furthermore, each patch element 20 comprises a third portion 23 folded over the respective flange 8 on the side that is opposite to the respective second portion 22; in practice, the third portions 23 are interposed between the respective stringer 3 and the shaped cavity 15 of the curing tool 12 when the stringer 3 is arranged on said curing tool 12.

In practice, the patch elements 20 are substantially folded in a "C"-shape around the side edges 13 of the flanges 8, so as to cover the layers 4 by sealing them outwards.

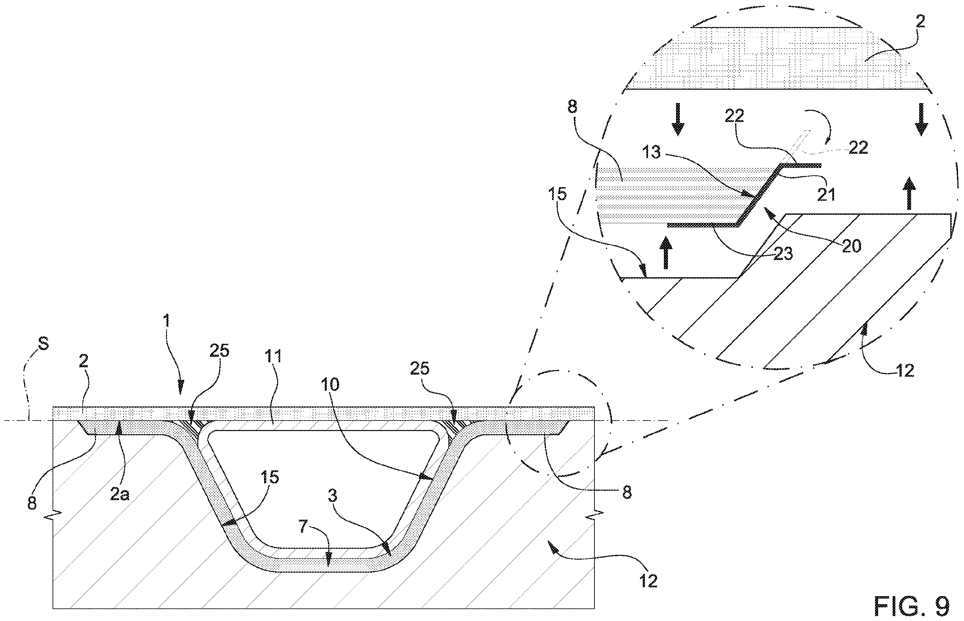

Alternatively, according to the solution shown in Figure 9, the second portions 22 are folded on the opposite side of the respective flanges 8, that is to say on the curing tool 12, while the patch elements 20 are being folded, so as to interpose themselves between the skin 2 and the said curing tool 12 while the skin 2 and the stringers 3 are brought into contact with each other.

In practice, the patch elements 20 are substantially folded in a "Z" shape around the side edges 13 of the flanges 8, so as to cover the layers 4 by sealing them outwards.

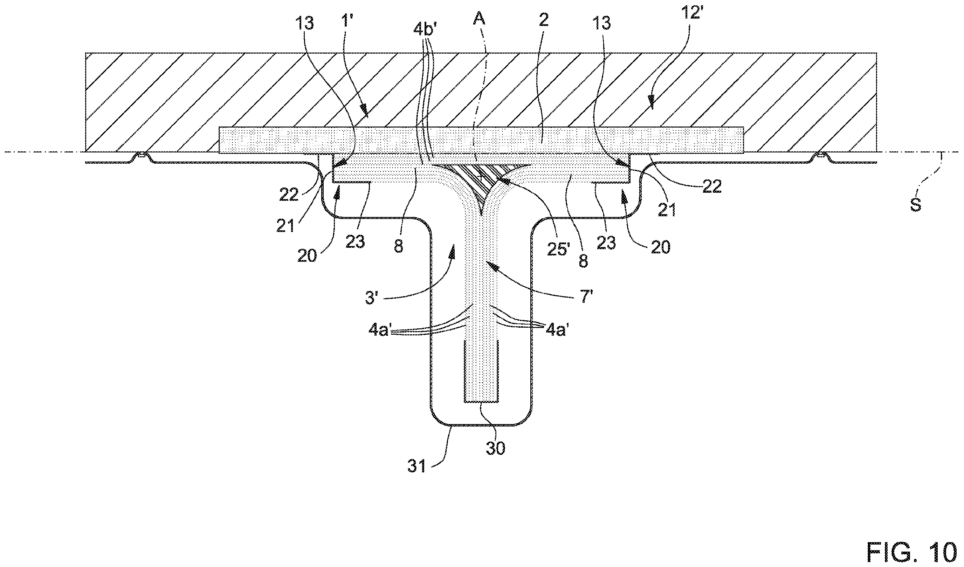

Figures 10 to 13 show, in cross-section and during a co-curing step, other types of structural components, which are respectively denoted 1', 1'', 1‴, 1ʺʺ and which can be obtained by a process disclosed in this invention.

The structural components 1', 1'', 1‴, 1ʺʺ and their manufacturing processes will be described below only insofar as they differ from each other and from structural component 1 as well as from the manufacturing methods that have been described above, indicating with the same reference numbers the parts that are equal or equivalent to parts that have already been described.

It should also be noted that, as has already been seen in connection with structural component 1, the final co-curing of structural components 1', 1'', 1‴, 1ʺʺ could also be replaced by the autoclave co-bonding or cold co-bonding or bonding thereof.

With regard to Figure 10, the structural component 1' comprises a skin 2 identical to the one described above and a stringer 3' whose geometry is different from that of the stringer 3.

More precisely, the stringer 3' has a longitudinal axis A and a cross-sectional area transverse to said longitudinal axis A that is substantially T-shaped. The stringer 3' includes two lateral flanges 8 that are similar to the flanges 8 of the stringer 3, and a raised portion 7' with a thin flat sheet, extending substantially in a direction orthogonal to the flanges 8 and to the lying surface S.

The stringer 3' is obtained by laminating on a special forming tool (that is known in itself and that has not been shown):
- two sets of layers 4a' of uncured L-shaped composite material opposite each other, each consisting of two straight sections at right angles to each other at the bases and the backs thereof that are joined by a common curvilinear section and are placed side by side along their respective backs; and
- a third series of flat layers 4b' of uncured composite material defining the part of the flanges 8' intended to come into contact with the skin 2.

Subsequently, one or more inserts 25', commonly known as "noodles", are inserted into the gap created between layers 4b' and layers 4a' in the area in which the common curvilinear features are placed; said curvilinear features act as fillers and are made of uncured composite material.

Flanges 8 of the stringer 3' differ from flanges 8 of the stringer 3 solely on account of the fact that the respective free end side edges 13 are cut at 90° with respect to the lying surface S and not in a slanted manner.

The assembly formed by the skin 2 and the stringers 3' is placed on a curing tool 12', in this case for example of the OML type, having a housing for the skin 2.

Advantageously, the side edges 13 of the flanges 8 are covered and sealed outwardly by respective patch elements 20 made of thin-walled uncured composite material.

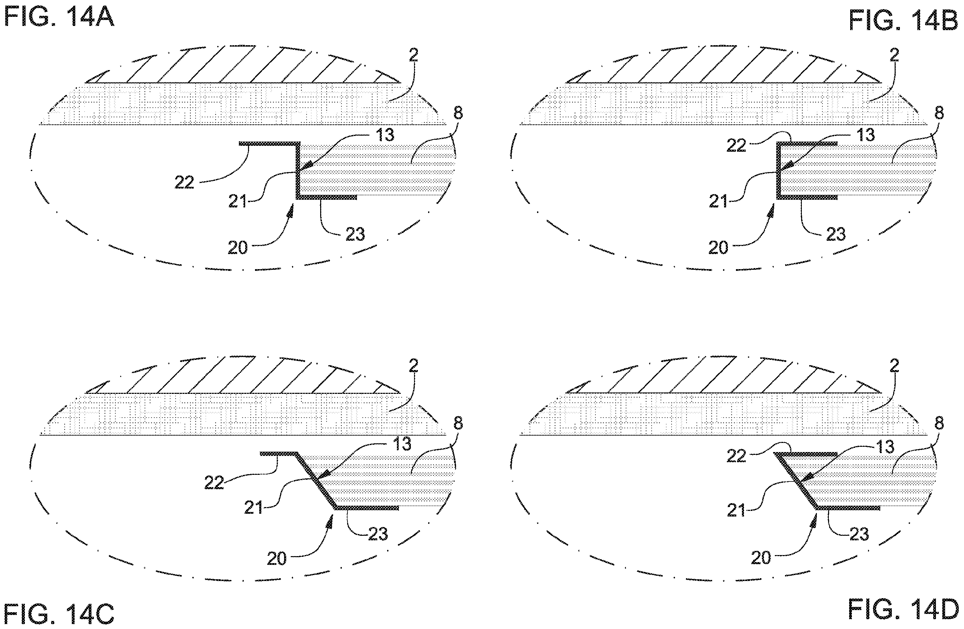

As can be seen, in particular, in Figures 10 and 14A, while applying the patch elements 20 on the side edges 13, the first portions 21 of said patch elements 20 cover the cut side edges 13, the second portions 22 protruding from one side of the said side edges 13 are folded over the skin 2 while the skin 2 and the stringers 3' are being brought into contact with each other, and the third portions 23 protruding from an opposite side of the said side edges 13 are folded over the respective flanges 8 on the side of the raised portion 7'.

In practice, the patch elements 20 are substantially folded in "Z"-shape around the side edges 13 of the flanges 8, so as to cover the layers 4a' and 4b' by sealing them outwards.

Alternatively, according to the solution shown in Figure 14b, the second portions 22 may be folded, during the folding of the patch elements 20, onto their respective flanges 8 in a position facing the third portions 23, so as to interpose themselves between the skin 2 and the stringers 3' while they are being brought into contact with each other.

In practice, the patch elements 20 are substantially folded in a C-shape around the side edges 13 of the flanges 8, so as to cover the layers 4a' and 4b' by sealing them outwards.

The free end side edge of the raised portion 7' is also covered and sealed outwards by a C-patch element 30.

The co-curing operation is carried out in this case by sealing a vacuum bag 31 on the curing tool 12' that externally covers each stringer 3'.

According to a possible alternative embodiment that has not been shown and by way of analogy to what has been seen in the procedure described with regard to Figures 1 to 6, the outermost composite layers 4a' of the two Ls forming the stringer 3' could respectively have lateral end flaps protruding with respect to the cut side edges 13 of the flanges 8 that are folded in a C-or Z-shape on the side edges 13 themselves, so as to cover and seal them outwards. In this manner, the said protruding flaps would replace the patch elements 20.

As denoted above, the stringers 3' (or skin 2) could be pre-cured, joined to the skin 2 (or stringers 3') by a layer of structural adhesive and then be subjected together with the skin 2 (or stringers 3') to an autoclave co-bonding operation.

According to a further possible embodiment, both the stringers 3' and the skin 2 could be pre-cured individually, joined together by using a structural adhesive and then subjected to an autoclave or cold bonding operation.

The variants shown in figures 14C and 14D refer to a solution for the stringer 3' consisting of a flange 8 that is identical to the flange 8 of the stringer 3 for component 1.

Even in this case, as in that of stringer 3, the flange 8 has respective free end side edges 13 cut in a slanted manner with respect to the lying surface S, so as to present, in the subsequent step of bringing the skin 2 and the stringers 3' into contact with each other, an extension, along or parallel to the lying surface S itself, increasing towards the skin 2.

The patch elements 20 of the flanges 8 can also be folded in this solution on the side edges 13 in a Z-shape (Figure 14C) or a C-shape (Figure 14D).

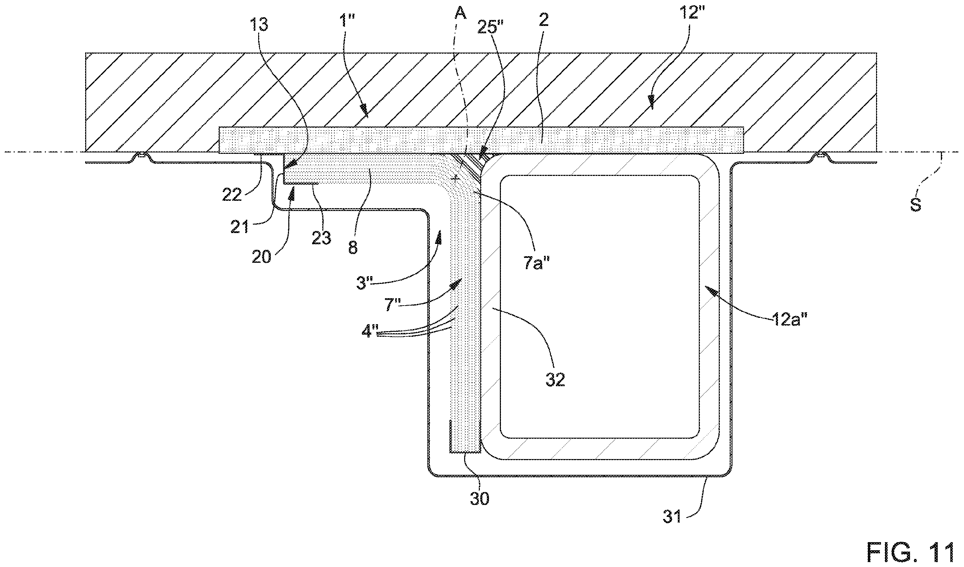

With regard to Figure 11, the structural component 1" comprises a skin 2 identical to the one described above and a stringer 3'' having a different geometry from that of the stringers 3 and 3'.

In particular, the stringer 3'' has a longitudinal axis A and a cross-sectional area transversal to said longitudinal axis A that is substantially L-shaped. The stringer 3'' includes a single lateral flange 8 that is identical to the corresponding flange 8 of the stringer 3', and a raised portion 7" having a thin flat sheet extending substantially in a direction that is orthogonal to the flange 8 and to the lying surface S of said flange.

More precisely, the raised portion 7" has one end connected to one end of the flange 8 by a curvilinear section 7a" .

The stringer 3" is obtained by laminating on a special moulding tool (that is known in itself and that has not been shown) a series of layers 4" of uncured L-shaped composite material having the same course as the flange 8 and the raised portion 7".

Even in this solution, as seen in the case of the stringer 3', the side edge 13 of the free end of the flange 8 is cut at 90° with respect to the lying surface S.

The assembly formed by skin 2 and stringers 3" is placed on a 12" curing tool, for example of the OML type in this case, having a housing for the skin 2.

In this case, the curing tool 12'' also includes an auxiliary tool 12a'' having a cavity quadrangular shape with curved or rounded edges, which is arranged on the opposite side of the skin 2 with respect to the curing tool 12'' and receives the raised portion 7" of the stringer 3'' in support on its own boundary wall 32.

One or more inserts 25", commonly known as "noodles", are inserted in the gap created between the skin 2, the auxiliary tool 12a' ' and the stringer 3" at the curvilinear section 7a". These inserts 25" act as fillers and are made of uncured composite material.

Advantageously, the side edge 13 of the flange 8 is covered and sealed outwardly by a patch element 20 (Figures 11, 14A and 14B) made of thin-walled uncured composite material, which is entirely identical to the one used to cover the side edges 13 of the flanges 8 of the stringer 3' and is folded in the exact same two modes that have been shown above (Figures 14A and 14B).

Even in this case, the free end side edge of the raised portion 7" is covered and sealed outwardly by a C-patch 30.

The co-curing operation is performed in this case by sealing on the curing tool 12'' and the auxiliary tool 12a" a vacuum bag 31 that externally covers each stringer 3' ' .

According to a possible alternative embodiment that has not been shown and by way of analogy to what has been seen in the process described in connection with Figures 1 to 6, the outermost composite material layer 4'' forming the stringer 3" could have a lateral end flap protruding with respect to the relative cut side edge 13 of the flange 8 and folded in a C-or Z-shape on the side edge 13 itself so as to cover it and seal it outwards. In this manner, said protruding flap would replace the patch element 20.

As denoted above, the stringers 3" (or skin 2) could be pre-cured, joined to skin 2 (or stringers 3") by a layer of structural adhesive and then subjected together with skin 2 (or stringers 3") to an autoclave co-bonding operation.

According to a further embodiment, both the stringers 3" and the skin 2 could be individually pre-cured, joined together by a structural adhesive and then subjected to an autoclave or cold bonding operation.

The variants shown in Figures 14C and 14D are also applicable to the stringer 3", whose flange 8 takes up a shape that is identical to the corresponding flange 8 of stringer 3 for component 1.

Even in this case, as in that of the stringer 3, the flange 8 has a free end side edge 13 cut in a slanted manner with respect to the lying surface S in such a way as to present, in the subsequent phase of bringing the skin 2 and the stringers 3" into contact with each other, an extension, along or parallel to the lying surface S itself, increasing towards the skin 2.

The patch elements 20 may be folded in this solution in a Z-shape (Figure 14C) or in a C-shape (Figure 14D) on the side edges 13 of the flanges 8.

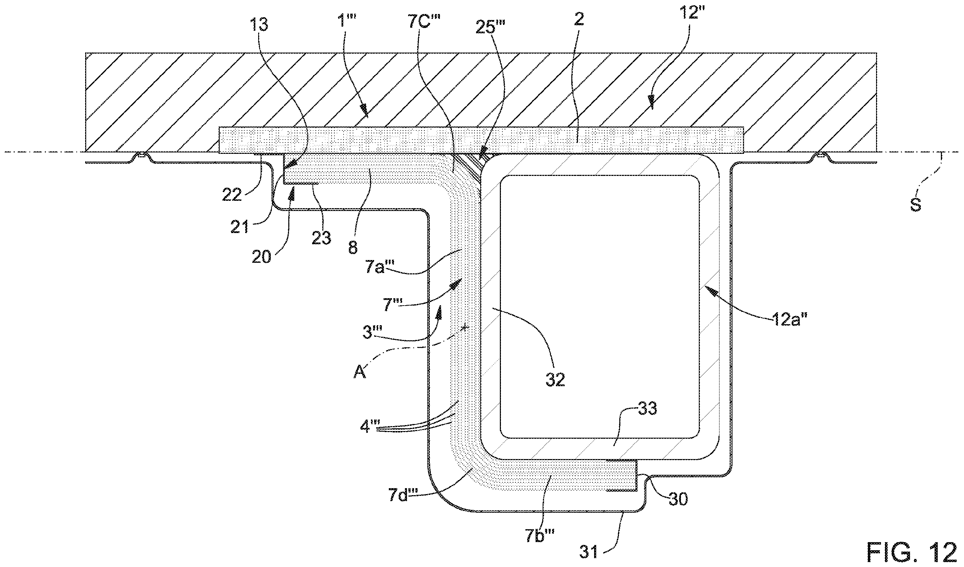

With regard to Figure 12, the structural component 1‴ comprises a skin 2 identical to the one described above and a stringer 3''' having a geometry that is different from that of the stringers 3, 3' and 3".

More precisely, the stringer 3‴ has a longitudinal axis A and a section that is transversal to said longitudinal axis A that is substantially Z-shaped. The stringer 3" ' comprises a single lateral flange 8 intended to be joined to the skin 2 that is identical to the flange 8 of the stringer 3", and a thin-sheet raised portion 7‴, extending cantilevered from the flange 8 and including a first section 7a‴ that is substantially orthogonal to the flange 8 and to the lying surface S of said flange, as well as a second flange section 7b‴ parallel to the flange 8 extending from the section 7a‴ in the opposite direction to said flange 8.

In particular, the section 7a''' has a first end connected to an end of the flange 8 by means of a curvilinear section 7c''' and a second opposite end connected to the section 7b‴ by means of another curvilinear section 7d‴.

The stringer 3‴ is made by laminating on a special moulding tool (that is per se well-known and not shown) a series of layers 4‴ made of uncured Z-shaped composite material, having the same course as the flange 8 and the raised portion 7‴.

Even in this solution, the side edge 13 of the free end of the flange 8 is cut orthogonally with respect to the lying surface S.

The assembly formed by the skin 2 and stringers 3‴ is placed on the same curing tool 12" and auxiliary tool 12a'' used for component 1".

In this case, the boundary wall 32 of the auxiliary tool 12a" is supported by section 7a‴ of the raised portion 7" ' of the stringer 3''' and another boundary wall 33 that is contiguous and orthogonal to said boundary wall 32 is supported by section 7b‴. The curvilinear section 7d‴ of the raised portion 7‴ of the stringer 3‴ is instead placed on the curvilinear edge joining the boundary walls 32 and 33.

One or more inserts 25‴, commonly known as "noodles", that act as fillers and that are made of uncured composite material, are inserted in the gap created between the skin 2, the auxiliary tool 12a'' and the stringer 3''' at the curvilinear section 7c‴ of the raised portion 7‴.

Advantageously, the side edge 13 of the flange 8 is covered and sealed outwardly by a patch element 20 (Figures 12, 14A and 14B) made of thin-walled uncured composite material, which is identical to the one used to cover the side edges 13 of the flanges 8 of the stringers 3, 3', 3'' and is folded in the exact same two ways that have been seen above (Figures 14A and 14B).

Even in this case, the free end side edge of the raised section 7b‴ of the raised portion 7‴ is covered and sealed outwards by a C-patch element 30.

As has been seen in connection with the structural component 1", the co-curing operation is performed by sealing on the curing tool 12" and the auxiliary tool 7a'' a vacuum bag 31 that outwardly covers each stringer 3‴.

According to a possible alternative embodiment that has not been shown and by way of analogy to what has been seen in the process described with regard to Figures 1 to 6, the outermost composite material layer 4‴ forming the stringer 3‴ could have a lateral end flap protruding with respect to the relative cut side edge 13 of the flange 8 that is folded in a C-or Z-shape on said side edge 13 so as to cover it and seal it outwards. In this manner, said protruding flap would replace the patch element 20.

As denoted above, the stringers 3‴ (or skin 2) could be pre-cured, joined to the skin 2 (or stringers 3‴) by a layer of structural adhesive and then subjected together with the skin 2 (or stringers 3‴) to an autoclave co-bonding operation.

According to a further possible embodiment, both the stringers 3‴ and the skin 2 could be pre-cured individually, joined together using a structural adhesive and then subjected to an autoclave or cold bonding operation.

The variants illustrated in Figures 14C and 14D are also applicable to the stringer 3''', whose flange 8 thus assumes a shape that is identical to the corresponding flange 8 of the stringer 3 for component 1.

Even in this case, as in that of stringer 3, the flange 8 has a free end side edge 13 cut in a slanted manner with respect to the lying surface S in such a way as to present, in the subsequent phase of bringing the skin 2 and the stringers 3‴ into contact with each other, an extension, along or parallel to the lying surface S itself, increasing towards the skin 2.

The patch elements 20 may be folded in this solution in a Z-shape (Figure 14C) or a C-shape (Figure 14D) on the side edges 13 of the flanges 8.

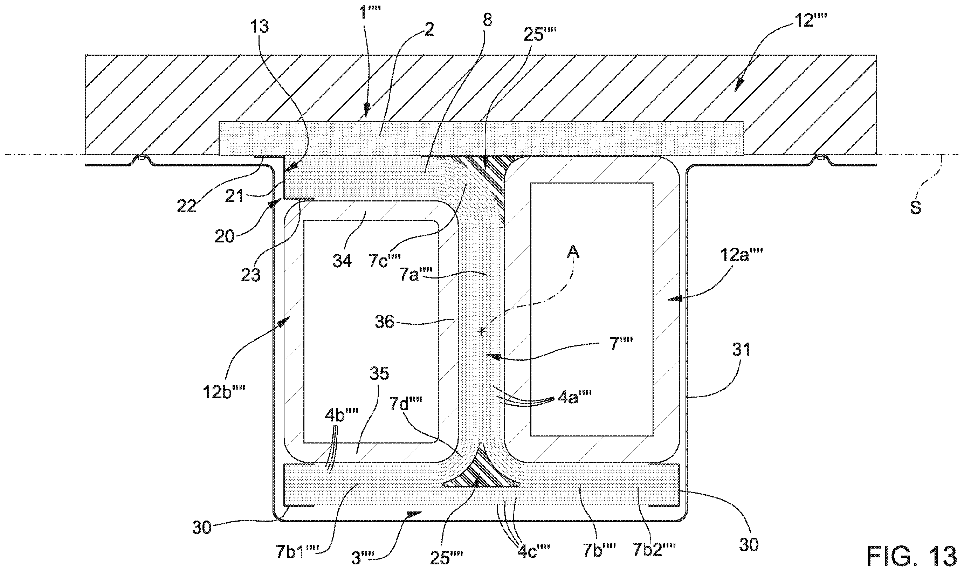

With regard to Figure 13, the structural component 1ʺʺ comprises a skin 2 identical to the one described above and a stringer 3ʺʺ having a different geometry from that of the stringers 3, 3', 3'' and 3" '.

More precisely, the stringer 3ʺʺ has a longitudinal axis A and a section transverse to said longitudinal axis A substantially shaped like a J. The stringer 3ʺʺ comprises a single lateral flange 8 that is intended to be joined to the skin 2 and is identical to the flange 8 of the stringers 3'' and 3" ', and a raised thin-laminated portion 7ʺʺ extending cantilevered from the flange 8, which comprises a first section 7aʺʺ that is substantially orthogonal to the flange 8 and to the lying surface S of said flange, and a second flanged section 7b‴ that is parallel to the flange 8 and that extends from the section 7aʺʺ symmetrically on both sides thereof.

In particular, the section 7aʺʺ has a first end connected to one end of the flange 8 by a curvilinear section 7cʺʺ and a second opposite end connected to section 7bʺʺ by a section 7dʺʺ having a section that increases and is delimited on the opposite sides by respective concave curvilinear surfaces.

More precisely, section 7bʺʺ is divided by sections 7aʺʺ and 7dʺʺ into two segments 7b1ʺʺ and 7b2ʺʺ extending from the opposite sides of said sections 7aʺʺ and 7dʺʺ; segment 7b1ʺʺ is arranged facing flange 8, whereas segment 7b2ʺʺ extends on the side of section 7aʺʺ that is opposite to segment 7b1‴.

The stringer 3ʺʺ is obtained by laminating on a special forming tool (that is well-known and has not been disclosed):
- a first series of layers 4aʺʺ made of untreated Z-shaped composite material in use that are arranged closer to the skin 2 and that have the same course as the flange 8, sections 7aʺʺ, 7cʺʺ and segment 7b2ʺʺ of the raised portion 7‴;
- a second series of layers 4bʺʺ of C-shaped uncured composite material having the same course as the flange 8, sections 7aʺʺ, 7cʺʺ and segment 7b1ʺʺ of the raised portion 7‴; and
- a series of flat layers 4cʺʺ of untreated composite material having the same course as the entire section 7bʺʺ, superimposed on the corresponding portions of layers 4aʺʺ and 4bʺʺ forming segments 7b1ʺʺ and 7b2ʺʺ.

Subsequently, one or more inserts 25ʺʺ, commonly known as "noodles", which act as fillers and are made of uncured composite material, are inserted into the gap between layers 4cʺʺ and layers 4aʺʺ and 4bʺʺ in the connecting area between sections 7aʺʺ, 7bʺʺ and 7dʺʺ.

, Similar to the stringer 3', 3'' and 3‴, the free end side edge 13 of the flange 8 is cut in a orthogonal direction with respect to the lying surface S.

The assembly formed by the skin 2 and the stringers 3ʺʺ is arranged on a curing tool 12ʺʺ having substantially the same shape as the curing tool 12" and comprising a first auxiliary tool 12aʺʺ that is similar to the auxiliary tool 12a'', and a second auxiliary tool 12bʺʺ, also having a cavity quadrangular shape with curved or rounded edges that is arranged when being used on the side of the section 7aʺʺ of the stringer 3ʺʺ that is opposite to the auxiliary tool 12aʺʺ. In this manner, the section 7aʺʺ of the stringer 3ʺʺ remains interposed between the two auxiliary tools 12aʺʺ and 12bʺʺ; furthermore, the auxiliary tool 12bʺʺ cooperates with the flange 8 through its own boundary wall 34, with the segment 7b1ʺʺ through its own boundary wall 35 that is opposite and parallel to the boundary wall 34, and with the section 7aʺʺ through its own boundary wall 36 that is orthogonal to and interposed between the boundary walls 34 and 35.

One or more inserts 25ʺʺ, commonly known as "noodles", which act as fillers and are made of uncured composite material, are inserted in the gap created between the skin 2, the auxiliary tool 12aʺʺ and the stringer 3ʺʺ at the curvilinear section 7cʺʺ of the raised portion 7ʺʺ.

Advantageously, the side edge 13 of the flange 8 is covered and sealed outwardly by a patch element 20 (Figures 13, 14A and 14B) made of thin-walled uncured composite material, which is entirely identical to the one used to cover the side edges 13 of the flanges 8 of the stringers 3, 3', 3'', 3''' and is folded in the exact same two modes that have been seen above (Figures 14A and 14B).

Even in this case, the opposite free end side edges of the raised portion 7bʺʺ are covered and sealed outwards by their respective C-shaped patch elements 30.

As has been seen in connection with structural components 1'', 1‴, the co-curing operation is performed by sealing on the curing tool 12ʺʺ and on the auxiliary tools 7aʺʺ and 7bʺʺ a vacuum bag 31 that externally covers each stringer 3ʺʺ.

According to a possible embodiment that has not been shown and by way of analogy to what has been seen in the process disclosed with regard to Figures 1 to 6, layer 4bʺʺ made of composite material forming the layer of the flange 8 opposite to the one intended to cooperate with the skin 2 could have a lateral end flap protruding with respect to the relative cut side edge 13 of the said flange 8 that is folded in a C-or Z-shape on said side edge 13 so as to cover it and seal it outwards. In this manner, said protruding flap would replace the patch element 20.

As denoted above, the stringers 3ʺʺ (or skin 2) could be pre-cured, joined to the skin 2 (or stringers 3ʺʺ) by a layer of structural adhesive and then subjected together with the skin 2 (or stringers 3ʺʺ) to an autoclave co-bonding operation.

According to a further possible embodiment, both the 3ʺʺ stringers and the skin 2 could be pre-cured individually, joined together by a structural adhesive and then subjected to an autoclave or cold bonding operation.

The variants illustrated in Figures 14C and 14D are also applicable to the stringer 3ʺʺ, whose flange 8 thus takes up a shape that is identical to the corresponding flange 8 of the stringer 3 for component 1.

Even in this case, as in that of the stringer 3, the flange 8 has a free end side edge 13 cut in a slanted manner with respect to the lying surface S in such a way as to present, in the subsequent phase of bringing into contact the skin 2 and the stringers 3‴ with each other, an extension, along or parallel to the lying surface S itself, increasing towards the skin 2.

The patch elements 20 are folded in this solution in a Z-shape (Figure 14C) or a C-shape (Figure 14D) on the side edges 13 of the flanges 8.

An examination of the characteristics of the manufacturing process for structural components 1, 1', 1", 1‴, 1ʺʺ described above reveals the advantages that can be achieved by it.

In particular, due to the presence of the further layer 16 or the patch elements 20, the uncovered fibres of the side edges 13 of the flanges 8 or the end edges of other parts of the stringers 3, 3', 3", 3‴, 3ʺʺ are protected, decreasing or eliminating the risk of infiltration of moisture or other fluids in use, as well as the risk of structural delamination. In other words, the additional layer 16 or the patch elements 20, in addition to being integral or constituent parts of the final structural component 1, 1', 1", 1ʺʺ, 1ʺʺ, define a moisture coating protecting the side edges 13 of the flanges 8 or the end edges of the stringers 3, 3", 3‴, 3ʺʺ from moisture.

Furthermore, the manufacturing process described with reference to Figures 1 to 9 and with reference to the variants of Figures 14C and 14D allows a structural component 1, 1' , 1", 1‴, 1ʺʺ free of accentuated surface discontinuities to be obtained, especially in the junction between the stringers 3, 3', 3", 3‴, 3ʺʺ and the skin 2. Indeed, a smoother connection is determined between the flanges 8 of each stringer 3, 3', 3'', 3ʺʺ and the said skin 2, also improving the distribution of stresses in the junction between the stringers 3, 3', 3'', 3ʺʺ and the skin 2.

In practice , this results in an optimal transfer of operating loads from the 3, 3', 3" , 3‴, 3ʺʺ stringers to the skin 2 and vice versa.

Furthermore, in the case of the stringers 3, these have a greater ease of handling and insertion/extraction in the curing tool 12, in particular in the shaped cavity 15 of the said curing tool 12. Accordingly, said shaped cavity 15 may have a simple shape free of sharp chamfers and surface discontinuities.

It is clear that modifications and variants can be made to the process manufacturing the structural components 1, 1' , 1", 1‴, 1ʺʺ described and shown herein without departing from the scope of protection defined by the claims.

In particular, the step of forming each stringer 3, 3', 3", 3‴, 3ʺʺ could be carried out when the stringer itself is placed on the curing tool 12, 12', 12", 12ʺʺ.

Furthermore, the step of cutting the side edges 13 could also be carried out directly when the stringer 3, 3', 3", 3‴, 3ʺʺ is placed on the curing tool 12, 12', 12", 12ʺʺ.

In this manner, the entire process could be carried out by using a single tool for forming and curing the component.

## Claims

1. Process for manufacturing a structural component (1, 1', 1", 1‴, 1ʺʺ) in composite material comprising a skin (2) and at least one stiffening stringer (3, 3', 3'', 3''', 3'''') applied rigidly and integrally to a face (2a) of said skin (2);
said process comprising the following steps:
a) arranging on a tool (12, 12', 12", 12ʺʺ) a plurality of first layers (4; 4a', 4b'; 4"; 4‴; 4aʺʺ, 4bʺʺ, 4cʺʺ) of uncured or pre-cured composite material forming said stringer (3, 3', 3", 3‴, 3ʺʺ), wherein said stringer (3, 3', 3", 3‴, 3ʺʺ) presents a longitudinal axis (A) and has a raised portion (7, 7', 7", 7‴, 7ʺʺ) protruding from at least one flange (8) extending parallel to said longitudinal axis (A) and along a lying surface (S), which is flat or is a surface of revolution;
b) arranging on said tool (12, 12', 12'', 12'''') a plurality of second layers of uncured or pre-cured composite material forming said skin (2);
c) making a face (2a) of said skin (2), parallel to said lying surface (S), and said flange (8) of said stringer (3, 3', 3'', 3''', 3'''') adhere to each other;
d) applying predetermined temperature and pressure on the assembly thus formed so as to compact said layers together, possibly cure the uncured material and rigidly join said skin (2) to said stringer (3, 3', 3", 3‴, 3ʺʺ);
e) performing a cutting operation on the free end side edge/s (13) of said flange (8) in a direction transversal to said lying surface (S) and to the layers (4; 4a', 4b'; 4"; 4‴; 4aʺʺ, 4bʺʺ) forming the flange (8) itself; and
f) covering at least said end side edge/s (13) of said flange (8) with a coating of composite material so as to seal outwards the layers (4; 4a', 4b'; 4"; 4‴; 4aʺʺ, 4bʺʺ) forming said flange (8); said coating of composite material defining, at the end of said process, a constituent or integral part of said structural component (1, 1', 1", 1‴, 1ʺʺ);
**characterized by** further comprising, after step e) and before step c), the step of g) laminating at least a further layer (16) of composite material forming said stringer (3, 3', 3", 3‴, 3ʺʺ) and applied on the side of the stringer (3, 3', 3", 3‴, 3ʺʺ) itself opposite to the one to be applied to said face (2a) of said skin (2); said further layer (16) having one or two lateral end flaps (17) protruding with respect to the cut side edge/s (13) of said flange (8); said step f) being carried out by folding said lateral end flap/s (17) of said further layer (16) on the respective said cut side edge/s (13) of said flange (8) to cover it/them and seal it/them outwards and to define said coating of composite material.

2. Process according to claim 1, wherein, during the folding of the lateral end flap/s (17) of said further layer (16), a first portion (18) of said lateral end flap (17) or of each said lateral end flap (17) covers the respective cut side edge (13) of said flange (8) and a second portion (19), still protruding from the cut side edge (13) itself, is folded over said flange (8) so as to interpose, in said step c), between said skin (2) and said stringer (3, 3', 3", 3‴, 3ʺʺ).

3. Process according to claim 2, wherein, during the folding of the lateral end flap/s (17) of said further layer (16), a first portion (18) of said lateral end flap (17) or of each said lateral end flap (17) covers the respective cut side edge (13) of the said flange (8) and a second portion (19), still protruding from the cut side edge (13) itself, is folded back from the opposite part of said flange (8), so as to interpose, during step c), between said skin (2) and said tool (12, 12', 12", 12ʺʺ).

4. Process for manufacturing a structural component (1, 1', 1", 1"', 1"") in composite material comprising a skin (2) and at least one stiffening stringer (3, 3', 3", 3''', 3"") applied rigidly and integrally to a face (2a) of said skin (2);
said process comprising the following steps:
a) arranging on a tool (12, 12', 12", 12ʺʺ) a plurality of first layers (4; 4a', 4b'; 4"; 4‴; 4aʺʺ, 4bʺʺ, 4cʺʺ) of uncured or pre-cured composite material forming said stringer (3, 3', 3", 3‴, 3ʺʺ), wherein said stringer (3, 3', 3", 3‴, 3ʺʺ) presents a longitudinal axis (A) and has a raised portion (7, 7', 7", 7‴, 7ʺʺ) protruding from at least one flange (8) extending parallel to said longitudinal axis (A) and along a lying surface (S), which is flat or is a surface of revolution;
b) arranging on said tool (12, 12', 12", 12ʺʺ) a plurality of second layers of uncured or pre-cured composite material forming said skin (2);
c) making a face (2a) of said skin (2), parallel to said lying surface (S), and said flange (8) of said stringer (3, 3', 3'', 3''', 3'''') adhere to each other;
d) applying predetermined temperature and pressure on the assembly thus formed so as to compact said layers together, possibly cure the uncured material and rigidly join said skin (2) to said stringer (3, 3', 3", 3‴, 3ʺʺ);
e) performing a cutting operation on the free end side edge/s (13) of said flange (8) in a direction transversal to said lying surface (S) and to the layers (4; 4a', 4b'; 4"; 4‴; 4aʺʺ, 4bʺʺ) forming the flange (8) itself; and
f) covering at least said end side edge/s (13) of said flange (8) with a coating of composite material so as to seal outwards the layers (4; 4a', 4b'; 4"; 4‴; 4aʺʺ, 4bʺʺ) forming said flange (8); said coating of composite material defining, at the end of said process, a constituent or integral part of said structural component (1, 1', 1", 1‴, 1ʺʺ);
**characterized in that**
said step f) is carried out by applying one or respective patch element/s (20) in uncured composite material on the cut side edge/s (13) of said flange (8) so as to cover it/them and seal it/them outwards and to define said coating of composite material;
wherein, during the application of said patch element (20) or of each said patch element (20) on the cut side edge/s (13), a first portion (21) of the patch element (20) itself covers the respective cut side edge (13) of said flange (8) and a second portion (22), still protruding from the cut side edge (13) itself, is folded on said flange (8) so as to interpose, in said step c), between said skin (2) and said stringer (3, 3', 3", 3‴, 3ʺʺ) or between said skin (2) and said tool (12, 12', 12", 12ʺʺ).

5. Process according to any one of the preceding claims, wherein in said step e), said cutting operation on the free end side edge/s (13) of said flange (8) is carried out in a slanted direction to said lying surface (S) and to the layers (4; 4a', 4b'; 4"; 4‴; 4aʺʺ, 4bʺʺ) forming said flange (8) itself and in such a way that the cut layers (4, 4a', 4b', 4", 4‴, 4aʺʺ, 4bʺʺ) of said flange (8) present, in the following step c), an extension, along said surface of laying (S), increasing towards the skin (2) itself.

6. Process according to any one of the preceding claims, wherein said stringer (3', 3", 3‴, 3ʺʺ) has, in a section transversal with respect to said longitudinal axis (A), a T- or L- or Z- or J-shaped profile.

7. Process according to any one of claims 1 to 5, wherein said raised portion (7) of said stringer (3) is concave and is placed centrally between two said lateral flanges (8) extending along said lying surface (S); and wherein, in said step c), said skin (2) and said concave raised portion (7) of said stringer (3) form a closed-profile cavity (10).

8. Process according to claim 7, comprising, after step a) and before step c), the step of h) positioning at least one longitudinal expandable insert (11) inside the concave raised portion (7) of said stringer (3), so that the expandable insert (11) is entirely housed within the cavity (10) defined during step c);
the process further comprising, after step c) and during step d), the step of i) expanding said expandable insert (11) against the walls delimiting the cavity (10) to maintain said cavity (10).

9. Process according to claim 7, wherein the step i) is performed by applying pressure inside said expandable insert (11), in particular the same pressure applied outside the assembly during step d).

10. Process according to claim 7, wherein the step i) is carried out by applying heat to said expandable insert (11) .

## Patentansprüche

1. Verfahren zum Herstellen einer Strukturkomponente (1, 1', 1", 1‴, 1ʺʺ) in einem Verbundstoff, der eine Haut (2) und mindestens einen Versteifungsstringer (3, 3', 3", 3‴, 3ʺʺ), der starr und einteilig an einer Fläche (2a) der Haut (2) angebracht ist, umfasst; wobei
das Verfahren die folgenden Schritte umfasst:
a) Anordnen an einem Werkzeug (12, 12', 12", 12ʺʺ) mehrerer erster Schichten (4; 4a', 4b'; 4"; 4‴; 4aʺʺ, 4bʺʺ, 4cʺʺ) eines ungehärteten oder vorgehärteten Verbundstoffs, der den Stringer (3, 3', 3", 3‴, 3ʺʺ) bildet, wobei der Stringer (3, 3', 3", 3‴, 3ʺʺ) eine Längsachse (A) darstellt und einen angehobenen Abschnitt (7, 7', 7", 7‴, 7ʺʺ) besitzt, der von mindestens einem Flansch (8), der parallel zur Längsachse (A) und entlang einer Liegefläche (S) verläuft, die flach ist oder eine rotationssymmetrische Fläche ist, vorsteht;
b) Anordnen am Werkzeug (12, 12', 12", 12ʺʺ) mehrerer zweiter Schichten eines ungehärteten oder vorgehärteten Verbundstoffs, der die Haut (2) bildet;
c) Verkleben einer Fläche (2a) der Haut (2), die parallel zur Liegefläche (S) ist, und des Flanschs (8) des Stringers (3, 3', 3", 3‴, 3ʺʺ) miteinander;
d) Aufbringen einer Temperatur und eines Drucks, die vorgegeben sind, auf die Anordnung, die somit gebildet wurde, um die Schichten zusammenzupressen, das ungehärtete Material gegebenenfalls zu härten und die Haut (2) mit dem Stringer (3, 3', 3", 3‴, 3ʺʺ) starr zu verbinden;
e) Durchführen einer Schneidoperation an der einen oder den mehreren freien Stirnseitenkanten (13) des Flanschs (8) in einer Richtung quer zu der Liegefläche (S) und zu den Schichten (4; 4a', 4b'; 4"; 4‴; 4aʺʺ, 4bʺʺ), die den Flansch (8) selbst bilden; und
f) Abdecken mindestens der einen oder der mehreren Stirnseitenkanten (13) des Flanschs (8) mit einer Beschichtung aus einem Verbundstoff, um die Schichten (4; 4a', 4b'; 4"; 4‴; 4aʺʺ, 4bʺʺ), die den Flansch (8) bilden, nach außen zu versiegeln; wobei die Beschichtung aus einem Verbundstoff am Ende des Verfahrens einen Bestandteil oder einen wesentlichen Teil der Strukturkomponente (1, 1', 1", 1‴, 1ʺʺ) definiert;
ferner gekennzeichnet nach dem Schritt e) und vor dem Schritt c) durch den Schritt des g) Laminierens mindestens einer weiteren Schicht (16) eines Verbundstoffs, der den Stringer (3, 3', 3", 3‴, 3ʺʺ) bildet und auf der Seite des Stringers (3, 3', 3", 3‴, 3ʺʺ) selbst aufgebracht wird, die der einen, die auf die Fläche (2a) der Haut (2) aufgebracht werden soll, gegenüberliegt; wobei die weitere Schicht (16) eine oder zwei seitliche Endklappen (17) besitzt, die in Bezug auf die eine oder die mehreren Schnittseitenkanten (13) des Flanschs (8) vorstehen; und der Schritt f) durch Klappen der einen oder der mehreren seitlichen Endklappen (17) der weiteren Schicht (16) auf die eine oder die mehreren jeweiligen Schnittseitenkanten (13) des Flanschs (8) ausgeführt wird, um sie abzudecken und sie nach außen zu versiegeln und die Beschichtung des Verbundstoffs zu definieren.

2. Verfahren nach Anspruch 1, wobei während des Klappens der einen oder der mehreren seitlichen Endklappen (17) der weiteren Schicht (16) ein erster Abschnitt (18) der seitlichen Endklappe (17) oder jeder der seitlichen Endklappen (17) die jeweilige Schnittseitenkante (13) des Flanschs (8) abdeckt und ein zweiter Abschnitts (19), der noch von der Schnittseitenkante (13) selbst vorsteht, derart über den Flansch (8) geklappt wird, dass er in Schritt c) zwischen der Haut (2) und dem Stringer (3, 3', 3", 3‴, 3ʺʺ) angeordnet ist.

3. Verfahren nach Anspruch 2, wobei während des Klappens der einen oder der mehreren seitlichen Endklappen (17) der weiteren Schicht (16) ein erster Abschnitt (18) der seitlichen Endklappe (17) oder jeder der seitlichen Endklappen (17) die jeweilige Schnittseitenkante (13) des Flanschs (8) abdeckt und ein zweiter Abschnitt (19), der noch von der Schnittseitenkante (13) selbst vorsteht, vom gegenüberliegenden Teil des Flanschs (8) derart zurückgeklappt wird, dass er während des Schritts c) zwischen der Haut (2) und dem Werkzeug (12, 12', 12", 12ʺʺ) angeordnet ist.

4. Verfahren zum Herstellen einer Strukturkomponente (1, 1', 1", 1‴, 1ʺʺ) in einem Verbundstoff, der eine Haut (2) und mindestens einen Versteifungsstringer (3, 3', 3", 3‴, 3ʺʺ), der starr und einteilig an einer Fläche (2a) der Haut (2) angebracht ist, umfasst; wobei
das Verfahren die folgenden Schritte umfasst:
a) Anordnen an einem Werkzeug (12, 12', 12", 12ʺʺ) mehrerer erster Schichten (4; 4a', 4b'; 4"; 4‴; 4aʺʺ, 4bʺʺ, 4cʺʺ) eines ungehärteten oder vorgehärteten Verbundstoffs, der den Stringer (3, 3', 3", 3‴, 3ʺʺ) bildet, wobei der Stringer (3, 3', 3", 3‴, 3ʺʺ) eine Längsachse (A) darstellt und einen angehobenen Abschnitt (7, 7', 7", 7‴, 7ʺʺ) besitzt, der von mindestens einem Flansch (8), der parallel zur Längsachse (A) und entlang einer Liegefläche (S) verläuft, die flach ist oder eine rotationssymmetrische Fläche ist, vorsteht;
b) Anordnen am Werkzeug (12, 12', 12", 12ʺʺ) mehrerer zweiter Schichten eines ungehärteten oder vorgehärteten Verbundstoffs, der die Haut (2) bildet;
c) Verkleben einer Fläche (2a) der Haut (2), die parallel zur Liegefläche (S) ist, und des Flanschs (8) des Stringers (3, 3', 3", 3‴, 3ʺʺ) miteinander;
d) Aufbringen einer Temperatur und eines Drucks, die vorgegeben sind, auf die Anordnung, die somit gebildet wurde, um die Schichten zusammenzupressen, das ungehärtete Material gegebenenfalls zu härten und die Haut (2) mit dem Stringer (3, 3', 3", 3‴, 3ʺʺ) starr zu verbinden;
e) Durchführen einer Schneidoperation an der einen oder den mehreren freien Stirnseitenkanten (13) des Flanschs (8) in einer Richtung quer zu der Liegefläche (S) und zu den Schichten (4; 4a', 4b'; 4"; 4‴; 4aʺʺ, 4bʺʺ), die den Flansch (8) selbst bilden; und
f) Abdecken mindestens der einen oder der mehreren Stirnseitenkanten (13) des Flanschs (8) mit einer Beschichtung aus einem Verbundstoff, um die Schichten (4; 4a', 4b'; 4"; 4‴; 4aʺʺ, 4bʺʺ), die den Flansch (8) bilden, nach außen zu versiegeln; wobei die Beschichtung aus einem Verbundstoff am Ende des Verfahrens einen Bestandteil oder einen wesentlichen Teil der Strukturkomponente (1, 1', 1", 1‴, 1ʺʺ) definiert;
**dadurch gekennzeichnet, dass** der Schritt f) ausgeführt wird, indem ein oder jeweilige Patch-Elemente (20) in einem ungehärteten Verbundstoff auf die eine oder die mehreren Schnittseitenkanten (13) des Flanschs (8) derart aufgebracht werden, dass sie sie abdecken und nach außen versiegeln und die Beschichtung des Verbundstoffs definieren; wobei
während des Aufbringens des Patch-Elements (20) oder jedes der Patch-Elemente (20) auf die eine oder die mehreren Schnittseitenkanten (13) ein erster Abschnitt (21) des Patch-Elements (20) selbst die jeweilige Schnittseitenkante (13) des Flanschs (8) abdeckt und ein zweiter Abschnitt (22), der noch von der Schnittseitenkante (13) selbst vorsteht, derart auf den Flansch (8) geklappt wird, dass er im Schritt c) zwischen der Haut (2) und dem Stringer (3, 3', 3", 3‴, 3ʺʺ) oder zwischen der Haut (2) und dem Werkzeug (12, 12', 12", 12ʺʺ angeordnet ist.

5. Verfahren nach einem der vorhergehenden Ansprüche, wobei im Schritt e) die Schneidoperation an der einen oder den mehreren freien Stirnseitenkanten (13) des Flanschs (8) in einer zur Liegefläche (S) und zu den Schichten (4; 4a', 4b'; 4"; 4‴; 4aʺʺ, 4bʺʺ), die den Flansch (8) selbst bilden, schrägen Richtung und derart ausgeführt wird, dass die Schnittschichten (4; 4a', 4b'; 4"; 4‴; 4aʺʺ, 4bʺʺ) des Flanschs (8) im folgenden Schritt c) eine Erweiterung entlang der Liegefläche (S), die zur Haut (2) selbst ansteigt, darstellen.

6. Verfahren nach einem der vorhergehenden Ansprüche, wobei der Stringer (3', 3", 3‴, 3ʺʺ) in einem Abschnitt, der in Bezug auf die Längsachse (A) quer liegt, ein T- oder ein L- oder ein Z- oder ein J-förmiges Profil besitzt.

7. Verfahren nach einem der Ansprüche 1 bis 5, wobei der angehobene Abschnitt (7) des Stringers (3) konkav ist und zwischen zwei seitlichen Flanschen (8), die entlang der Liegefläche (S) verlaufen, mittig angeordnet ist und im Schritt c) die Haut (2) und der konkave angehobene Abschnitt (7) des Stringers (3) einen Hohlraum (10) mit geschlossenem Profil bilden.

8. Verfahren nach Anspruch 7, der nach Schritt a) und vor Schritt c) den Schritt des h) Positionierens mindestens eines längs verlaufenden erweiterbaren Einsatzes (11) im konkaven angehobenen Abschnitt (7) des Stringers (3) derart, dass der erweiterbare Einsatz (11) in dem Hohlraum (10), der während des Schritts c) definiert wird, vollständig untergebracht ist, umfasst; wobei
das Verfahren ferner nach Schritt c) und während des Schritts d) den Schritt des i) Erweiterns des erweiterbaren Einsatzes (11) gegen die Wände, die den Hohlraum (10) begrenzen, um den Hohlraum (10) aufrechtzuerhalten, umfasst.

9. Verfahren nach Anspruch 7, wobei der Schritt i) durch Aufbringen von Druck im erweiterbaren Einsatz (11), insbesondere desselben Drucks, der während des Schritts d) außerhalb der Anordnung aufgebracht wird, durchgeführt wird.

10. Verfahren nach Anspruch 7, wobei der Schritt i) durch Aufbringen von Wärme auf den erweiterbaren Einsatz (11) ausgeführt wird.

## Revendications

1. Procédé pour fabriquer un composant structural (1, 1', 1" , 1‴, 1ʺʺ) en matériau composite comprenant un revêtement (2) et au moins une lisse (3, 3', 3", 3‴, 3ʺʺ) de raidissement appliquée de manière rigide et d'un seul tenant sur une face (2a) dudit revêtement (2) ;
ledit procédé comprenant les étapes suivantes :
a) l'agencement sur un outil (12, 12', 12", 12ʺʺ) d'une pluralité de premières couches (4 ; 4a', 4b' ; 4" ; 4‴ ; 4aʺʺ, 4bʺʺ, 4cʺʺ) de matériau composite non durci ou prédurci formant ladite lisse (3, 3', 3", 3‴, 3ʺʺ), dans lequel ladite lisse (3, 3', 3", 3‴, 3ʺʺ) présente un axe longitudinal (A) et a une portion surélevée (7, 7', 7", 7‴, 7ʺʺ) faisant saillie à partir d'au moins une semelle (8) s'étendant parallèlement audit axe longitudinal (A) et le long d'une surface d'installation (S), qui est plate ou est une surface de révolution ;
b) l'agencement sur ledit outil (12, 12', 12", 12ʺʺ) d'une pluralité de deuxièmes couches de matériau composite non durci ou prédurci formant ledit revêtement (2) ;
c) le fait d'amener une face (2a) dudit revêtement (2), parallèle à ladite surface d'installation (S), et ladite semelle (8) de ladite lisse (3, 3', 3", 3‴, 3ʺʺ) à adhérer l'une à l'autre ;
d) l'application d'une température et d'une pression prédéterminées sur l'ensemble ainsi formé de manière à compacter lesdites couches ensemble, éventuellement faire durcir le matériau non durci et assembler de manière rigide ledit revêtement (2) avec ladite lisse (3, 3', 3", 3‴, 3ʺʺ) ;
e) la réalisation d'une opération de coupe sur le ou les bords de côté (13) d'extrémité libre de ladite semelle (8) dans une direction transversale par rapport à ladite surface d'installation (S) et par rapport aux couches (4; 4a', 4b' ; 4" ; 4‴ ; 4aʺʺ, 4bʺʺ) formant la semelle (8) elle-même ; et
f) le fait de recouvrir au moins ledit ou lesdits bords de côté (13) d'extrémité de ladite semelle (8) avec une pellicule de matériau composite de manière à sceller vers l'extérieur les couches (4 ; 4a', 4b' ; 4" ; 4‴ ; 4aʺʺ, 4bʺʺ) formant ladite semelle (8) ; ladite pellicule de matériau composite définissant, à la fin dudit procédé, un constituant ou une partie intégrante dudit composant structural (1, 1', 1", 1‴, 1ʺʺ) ;
**caractérisé en ce qu'**il comprend en outre, après l'étape e) et avant l'étape c), l'étape consistant à g) stratifier au moins une couche supplémentaire (16) de matériau composite formant ladite lisse (3, 3', 3", 3‴, 3ʺʺ) et appliqué sur le côté de la lisse (3, 3', 3", 3‴, 3ʺʺ) elle-même à l'opposé de celui devant être appliqué sur ladite face (2a) dudit revêtement (2) ; ladite couche supplémentaire (16) ayant un ou deux rabats d'extrémité latérale (17) faisant saillie par rapport au ou aux bords de côté (13) coupés de ladite semelle (8) ; ladite étape f) étant réalisée en pliant ledit ou lesdits rabats d'extrémité latérale (17) de ladite couche supplémentaire (16) sur ledit ou lesdits bords de côté (13) coupés respectifs de ladite semelle (8) pour les recouvrir et les sceller vers l'extérieur et pour définir ladite pellicule de matériau composite.

2. Procédé selon la revendication 1, dans lequel, durant le pliage du ou des rabats d'extrémité latérale (17) de ladite couche supplémentaire (16), une première portion (18) dudit rabat d'extrémité latérale (17) ou de chaque dit rabat d'extrémité latérale (17) recouvre le bord de côté (13) coupé respectif de ladite semelle (8) et une deuxième portion (19), faisant toujours saillie à partir du bord de côté (13) coupé lui-même, est pliée sur ladite semelle (8) de manière à s'interposer, lors de ladite étape c), entre ledit revêtement (2) et ladite lisse (3, 3', 3", 3‴, 3ʺʺ).

3. Procédé selon la revendication 2, dans lequel, durant le pliage du ou des rabats d'extrémité latérale (17) de ladite couche supplémentaire (16), une première portion (18) dudit rabat d'extrémité latérale (17) ou de chaque dit rabat d'extrémité latérale (17) recouvre le bord de côté (13) coupé respectif de ladite semelle (8) et une deuxième portion (19), faisant toujours saillie à partir du bord de côté (13) coupé lui-même, est repliée à partir de la partie opposée de ladite semelle (8), de manière à s'interposer, durant l'étape c), entre ledit revêtement (2) et ledit outil (12, 12', 12", 12ʺʺ).

4. Procédé pour fabriquer un composant structural (1, 1', 1", 1‴, 1ʺʺ) en matériau composite comprenant un revêtement (2) et au moins une lisse (3, 3', 3", 3‴, 3ʺʺ) de raidissement appliquée de manière rigide et d'un seul tenant sur une face (2a) dudit revêtement (2) ;
ledit procédé comprenant les étapes suivantes :
a) l'agencement sur un outil (12, 12', 12", 12ʺʺ) d'une pluralité de premières couches (4 ; 4a', 4b' ; 4" ; 4‴ ; 4aʺʺ, 4bʺʺ, 4cʺʺ) de matériau composite non durci ou prédurci formant ladite lisse (3, 3', 3", 3‴, 3ʺʺ), dans lequel ladite lisse (3, 3', 3", 3‴, 3ʺʺ) présente un axe longitudinal (A) et a une portion surélevée (7, 7', 7", 7‴, 7ʺʺ) faisant saillie à partir d'au moins une semelle (8) s'étendant parallèlement audit axe longitudinal (A) et le long d'une surface d'installation (S), qui est plate ou est une surface de révolution ;
b) l'agencement sur ledit outil (12, 12', 12", 12ʺʺ) d'une pluralité de deuxièmes couches de matériau composite non durci ou prédurci formant ledit revêtement (2) ;
c) le fait d'amener une face (2a) dudit revêtement (2), parallèle à ladite surface d'installation (S), et ladite semelle (8) de ladite lisse (3, 3', 3", 3‴, 3ʺʺ) à adhérer l'une à l'autre ;
d) l'application d'une température et d'une pression prédéterminées sur l'ensemble ainsi formé de manière à compacter lesdites couches ensemble, éventuellement faire durcir le matériau non durci et assembler de manière rigide ledit revêtement (2) avec ladite lisse (3, 3', 3", 3‴, 3ʺʺ) ;
e) la réalisation d'une opération de coupe sur le ou les bords de côté (13) d'extrémité libre de ladite semelle (8) dans une direction transversale par rapport à ladite surface d'installation (S) et par rapport aux couches (4 ; 4a' , 4b' ; 4" ; 4‴ ; 4aʺʺ, 4bʺʺ) formant la semelle (8) elle-même ; et
f) le fait de recouvrir au moins ledit ou lesdits bords de côté (13) d'extrémité de ladite semelle (8) avec une pellicule de matériau composite de manière à sceller vers l'extérieur les couches (4 ; 4a', 4b' ; 4" ; 4‴ ; 4aʺʺ, 4bʺʺ) formant ladite semelle (8) ; ladite pellicule de matériau composite définissant, à la fin dudit procédé, un constituant ou une partie intégrante dudit composant structural (1, 1', 1", 1‴, 1ʺʺ) ;
**caractérisé en ce que**
ladite étape f) est réalisée en appliquant un ou des éléments rajoutés (20) respectifs dans un matériau composite non durci sur le ou les bords de côté (13) coupés de ladite semelle (8) de manière à les recouvrir et les sceller vers l'extérieur et à définir ladite pellicule de matériau composite ;
dans lequel, durant l'application dudit élément rajouté (20) ou de chaque dit élément rajouté (20) sur le ou les bords de côté (13) coupés, une première portion (21) de l'élément rajouté (20) lui-même recouvre le bord de côté (13) coupé respectif de ladite semelle (8) et une deuxième portion (22), faisant toujours saillie à partir du bord de côté (13) coupé lui-même, est pliée sur ladite semelle (8) de manière à s'interposer, lors de ladite étape c), entre ledit revêtement (2) et ladite lisse (3, 3', 3", 3‴, 3ʺʺ) ou entre ledit revêtement (2) et ledit outil (12, 12', 12", 12ʺʺ).

5. Procédé selon l'une quelconque des revendications précédentes, dans lequel lors de ladite étape e), ladite opération de coupe sur le ou les bords de côté (13) d'extrémité libre de ladite semelle (8) est réalisée dans une direction inclinée par rapport à ladite surface d'installation (S) et aux couches (4 ; 4a', 4b' ; 4" ; 4‴ ; 4aʺʺ, 4bʺʺ) formant ladite semelle (8) elle-même et de telle façon que les couches (4, 4a', 4b', 4", 4‴, 4aʺʺ, 4bʺʺ) coupées de ladite semelle (8) présentent, lors de l'étape c) suivante, une extension, le long de ladite surface d'installation (S), augmentant vers le revêtement (2) lui-même.

6. Procédé selon l'une quelconque des revendications précédentes, dans lequel ladite lisse (3', 3", 3‴, 3ʺʺ) a, dans une section transversale par rapport audit axe longitudinal (A), un profil en forme de T ou de L ou de Z ou de J.

7. Procédé selon l'une quelconque des revendications 1 à 5, dans lequel ladite portion surélevée (7) de ladite lisse (3) est concave et est placée de manière centrale entre deux dites semelles (8) latérales s'étendant le long de ladite surface d'installation (S) ; et dans lequel, lors de ladite étape c), ledit revêtement (2) et ladite portion surélevée (7) concave de ladite lisse (3) forment une cavité (10) au profil fermé.

8. Procédé selon la revendication 7, comprenant, après l'étape a) et avant l'étape c), l'étape consistant à h) positionner au moins un insert extensible (11) longitudinal à l'intérieur de ladite portion surélevée (7) concave de ladite lisse (3), de sorte que l'insert extensible (11) soit entièrement contenu dans la cavité (10) définie durant l'étape c) ;
le procédé comprenant en outre, après l'étape c) et durant l'étape d), l'étape consistant à i) étendre ledit insert extensible (11) contre les parois délimitant la cavité (10) pour maintenir ladite cavité (10) .

9. Procédé selon la revendication 7, dans lequel l'étape i) est réalisée en appliquant une pression à l'intérieur dudit insert extensible (11), en particulier la même pression appliquée à l'extérieur de l'ensemble durant l'étape d).

10. Procédé selon la revendication 7, dans lequel l'étape i) est réalisée en appliquant de la chaleur sur ledit insert extensible (11).
